(19) Europäisches Patentamt
European Patent Office
Office européen des brevets

(11) **EP 4 576 843 A1**

(12) **EUROPEAN PATENT APPLICATION**
published in accordance with Art. 153(4) EPC

(43) Date of publication:
**25.06.2025 Bulletin 2025/26**

(21) Application number: **23870214.6**

(22) Date of filing: **06.09.2023**

(51) International Patent Classification (IPC):
*H04W 4/40* (2018.01)

(52) Cooperative Patent Classification (CPC):
**H04L 1/00; H04W 4/40; H04W 72/0446;**
**H04W 72/0453; H04W 72/232; H04W 76/14**

(86) International application number:
**PCT/CN2023/117192**

(87) International publication number:
**WO 2024/066975 (04.04.2024 Gazette 2024/14)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **30.09.2022 CN 202211216365**

(71) Applicant: **Huawei Technologies Co., Ltd.**
**Shenzhen, Guangdong 518129 (CN)**

(72) Inventors:
• **QI, Hong**
**Shenzhen, Guangdong 518129 (CN)**
• **ZHANG, Yi**
**Shenzhen, Guangdong 518129 (CN)**
• **SU, Hongjia**
**Shenzhen, Guangdong 518129 (CN)**
• **YI, Feng**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **COMMUNICATION METHOD AND APPARATUS**

(57) This application provides a communication method and apparatus. The method includes: A first terminal device sends first sidelink information to a second terminal device; and the first terminal device determines that the first sidelink information is successfully transmitted, and the first terminal device performs resource reselection on a resource in a first resource set. The first resource set includes at least one group of resources, the at least one group of resources includes at least one first resource, each group of resources in the at least one group of resources are consecutive in time domain, and the at least one first resource is used to retransmit the first sidelink information. According to the foregoing method, when the first sidelink information is successfully transmitted, the first terminal device may perform resource reselection. Because reselected resources can ensure resource continuity, data transmission interruption is avoided, data transmission reliability is improved, and quality of service of data transmission on an unlicensed band is ensured.

First terminal device | Second terminal device

Step 501: The first terminal device sends first sidelink information to the second terminal device

First sidelink information →

Step 502: The first terminal device determines that the first sidelink information is successfully transmitted, and the first terminal device performs resource reselection on a resource in a first resource set

FIG. 5

## Description

<u>CROSS-REFERENCE TO RELATED APPLICATIONS</u>

This application claims priority to Chinese Patent Application No. 202211216365.9, filed with the China National Intellectual Property Administration on September 30, 2022 and entitled "COMMUNICATION METHOD AND APPARATUS", which is incorporated herein by reference in its entirety.

<u>TECHNICAL FIELD</u>

This application relates to the field of communication technologies, and in particular, to a communication method and apparatus.

<u>BACKGROUND</u>

In a wireless communication network defined by the 3rd generation partnership project (the 3rd generation partnership project, 3GPP), an air interface (air interface) for direct communication between terminal devices is a PC5 interface, which is also referred to as PC5 communication. From a perspective of a link, a link for direct communication between terminal devices is defined as a sidelink (sidelink, SL), and a typical scenario is, for example, vehicle-to-everything (Vehicle-to-everything, V2X), or communication between intelligent terminals. An important evolution direction of SL communication is to enable SL communication in an unlicensed (unlicensed) spectrum in local space, and this part of technologies may be collectively referred to as SL-unlicensed (SL-unlicensed, SL-U) communication.

There are two main transmission modes in the SL communication: a mode 1 (mode 1): a mode based on scheduling performed by a base station; and a mode 2 (mode 2): a mode in which a terminal device autonomously selects a resource. In the mode 2, the terminal device may reserve a resource for a specified time-frequency resource, so that data transmission can be performed by using the reserved resource. In an unlicensed spectrum, before performing communication, the terminal device needs to contend for a channel through listen-before-talk (listen-before-talk, LBT), and if the contention succeeds, may perform data transmission.

In a process in which the terminal device selects a resource, considering that data may be retransmitted, the terminal device selects both an initial transmission resource and a retransmission resource. However, if an initially transmitted data packet is correctly received by a receive end, the terminal device no longer uses the selected retransmission resource. However, once the selected retransmission resource is no longer used, a sidelink resource is idle, and may be preempted by another terminal device. Consequently, data transmission of the terminal device is interrupted, and data transmission reliability deteriorates.

## SUMMARY

This application provides a communication method and apparatus, to improve reliability of data transmission in an unlicensed spectrum.

According to a first aspect, this application provides a communication method. The method is applicable to an unlicensed spectrum communication scenario such as V2X and SL-U. The method is performed by a terminal device or a module in the terminal device. An example in which the method is performed by a first terminal device is used for description here. The method includes: The first terminal device sends first sidelink information to a second terminal device; and the first terminal device determines that the first sidelink information is successfully transmitted, and the first terminal device performs resource reselection on a resource in a first resource set. The first resource set includes at least one group of resources, the at least one group of resources includes at least one first resource, each group of resources in the at least one group of resources are consecutive in time domain, and the at least one first resource is used to retransmit the first sidelink information.

According to the foregoing method, when the first sidelink information is successfully transmitted, the first terminal device may perform resource reselection. Because reselected resources can ensure resource continuity, data transmission interruption is avoided, data transmission reliability is improved, and quality of service of data transmission on an unlicensed band is ensured.

In a possible implementation, that the first terminal device performs resource reselection on a resource in a first resource set includes: The first terminal device performs resource reselection on the resource in the first resource set to determine a second resource set.

In a possible implementation, the method further includes: The first terminal device sends second sidelink information on a resource in the second resource set, where data in the second sidelink information is different from data in the first sidelink information.

In a possible implementation, the second resource set includes N resources, N is an integer greater than 0, and the N resources satisfy: the N resources are consecutive in time domain, the N resources and at least one resource other than M resources in the first resource set are consecutive in time domain, and the M resources are resources on which the first terminal device performs resource reselection in the first resource set; or the N resources include at least two groups of resources, each group of resources in the at least two groups of resources are consecutive in time domain, and one group of resources in the at least two groups of resources and at least one resource other than M resources in the first resource set are consecutive in time domain.

In a possible implementation, that the first terminal device performs resource reselection on a resource in a first resource set includes: The first terminal device performs resource reselection on a resource located after a first feedback resource in the first resource set, where the first feedback resource is used to feed back whether the first sidelink information is successfully received, and the first feedback resource is located before the at least one first resource in time domain; or the first terminal device performs resource reselection on a second resource and a resource located after the second resource in the first resource set, where the second resource is the 1st first resource in the at least one first resource in time domain.

In a possible implementation, the method further includes: A physical layer of the first terminal device triggers the resource reselection on the resource in the first resource set.

In a possible implementation, the method further includes: The first terminal device determines the first resource set in a sidelink resource pool.

In a possible implementation, that the first terminal device determines that the first sidelink information is successfully transmitted includes: If the first terminal device receives an acknowledgment corresponding to the first sidelink information on the first feedback resource, determines that the first sidelink information is successfully transmitted; or if the first terminal device does not receive a negative acknowledgment corresponding to the first sidelink information on the first feedback resource, determines that the first sidelink information is successfully transmitted. The first feedback resource is used to feed back whether the first sidelink information is successfully received.

According to a second aspect, this application provides a communication method. The method is applicable to an unlicensed spectrum communication scenario such as V2X and SL-U. The method is performed by a terminal device or a module in the terminal device. An example in which the method is performed by a first terminal device is used for description here. The method includes: The first terminal device sends first sidelink information to a second terminal device; and the first terminal device determines that the first sidelink information is successfully transmitted, and the first terminal device sends second sidelink information on at least one first resource in a third resource set. The at least one first resource is used to retransmit the first sidelink information, resources included in the third resource set are consecutive in a time domain unit, the at least one first resource is located after a first feedback resource in time domain, and the first feedback resource is used to feed back whether the first sidelink information is successfully received.

According to the foregoing method, when the first sidelink information is successfully transmitted, the first terminal device may transmit the second sidelink information on the first resource used to retransmit the first sidelink information, so that data transmission continuity can be ensured, data transmission interruption is avoided, data transmission reliability is improved, and quality of service of data transmission on an unlicensed band is ensured.

In a possible implementation, the at least one first resource is within a first channel occupancy time, and the first channel occupancy time is total duration for channel access by the first terminal device after performing a channel access procedure.

In a possible implementation, that the first terminal device determines that the first sidelink information is successfully transmitted includes: If the first terminal device receives an acknowledgment corresponding to the first sidelink information on the first feedback resource, determines that the first sidelink information is successfully transmitted; or if the first terminal device does not receive a negative acknowledgment corresponding to the first sidelink information on the first feedback resource, determines that the first sidelink information is successfully transmitted. The first feedback resource is used to feed back whether the first sidelink information is successfully received.

In a possible implementation, the second sidelink information is the first sidelink information, and feedback corresponding to the first sidelink information retransmitted on the at least one first resource is disabled.

In a possible implementation, the resources included in the third resource set are used to initially transmit and/or retransmit a plurality of pieces of sidelink information, and the plurality of pieces of sidelink information include the first sidelink information. The second sidelink information is any sidelink information other than the first sidelink information in the plurality of pieces of sidelink information.

In a possible implementation, one or more first resources are included between a second resource in the third resource set and the first feedback resource, and the second resource is used to transmit sidelink information other than the first sidelink information.

In a possible implementation, the third resource set includes a fourth resource set. The fourth resource set includes a sidelink resource shared by the first terminal device with the second terminal device or a third terminal device.

In a possible implementation, a first resource in the at least one first resource is indicated by control information, and the sidelink control information is sent by the first terminal device.

In a possible implementation, the third resource set includes at least one channel occupancy duration.

In a possible implementation, the first terminal device determines the third resource set in a sidelink resource pool, in other words, the third resource set is in the sidelink resource pool.

According to a third aspect, this application provides a communication method. The method is applicable to an unlicensed spectrum communication scenario such as V2X and SL-U. The method is performed by a terminal device or a module in the terminal device. An example in which the method is performed by a second terminal device is used for description here. The method includes: The second terminal device receives first sidelink information from a first terminal device; and the second terminal device sends feedback information to the first terminal device by using a first feedback resource when successfully decoding the first sidelink information. The feedback information indicates that the first sidelink information is successfully transmitted.

According to a fourth aspect, this application further provides a communication apparatus. The communication apparatus has a function of implementing any method provided in any one of the first aspect to the third aspect. The communication apparatus may be implemented by hardware, or may be implemented by hardware executing corresponding software. The hardware or the software includes one or more units or modules corresponding to the foregoing functions.

In a possible implementation, the communication apparatus includes: a processor. The processor is configured to support the communication apparatus in performing a corresponding function of the network device in the foregoing method. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device such as a terminal device.

In a possible implementation, the communication apparatus includes corresponding functional modules respectively configured to implement the steps in the foregoing method. The function may be implemented by hardware, or may be implemented by hardware executing corresponding software. The hardware or software includes one or more modules corresponding to the foregoing functions.

In a possible implementation, a structure of the communication apparatus includes a processing unit and a communication unit. These units may perform corresponding functions in the foregoing method examples. For details, refer to descriptions in the method provided in any one of the first aspect to the third aspect. Details are not described herein.

According to a fifth aspect, a communication apparatus is provided. The communication apparatus includes a processor and an interface circuit. The interface circuit is configured to receive a signal from a communication apparatus other than the communication apparatus, and transmit the signal to the processor, or send a signal from the processor to a communication apparatus other than the communication apparatus. The processor is configured to implement the method in any one of the first aspect to the third aspect, and any possible implementation of any one of the aspects by using a logic circuit or by executing code instructions.

According to a sixth aspect, a communication apparatus is provided. The communication apparatus includes a processor and an interface circuit. The interface circuit is configured to receive a signal from a communication apparatus other than the communication apparatus, and transmit the signal to the processor, or send a signal from the processor to a communication apparatus other than the communication apparatus. The processor is configured to implement the functional module of the method in any one of the first aspect to the third aspect, and any possible implementation of any one of the aspects by using a logic circuit or by executing code instructions.

According to a seventh aspect, a computer-readable storage medium is provided. The computer-readable storage medium stores a computer program or instructions. When the computer program or the instructions are executed by a processor, the method in any one of the first aspect to the third aspect, and any possible implementation of any one of the aspects is implemented.

According to an eighth aspect, a computer program product storing instructions is provided. When the instructions are run by a processor, the method in any one of the first aspect to the third aspect, and any possible implementation of any one of the aspects is implemented.

According to a ninth aspect, a chip is provided. The chip includes a processor, and may further include a memory, and is configured to implement the method in any one of the first aspect to the third aspect, and any possible implementation of any one of the aspects. The chip may include a chip, or may include a chip and another discrete component.

According to a tenth aspect, a communication system is provided, including a first terminal device, where the first terminal device is configured to perform the method according to any one of the first aspect and the possible implementations of the first aspect, or the first terminal device is configured to perform the method in any one of the second aspect and the possible implementations of the second aspect; and a second terminal device, where the second terminal device is configured to perform the method in the implementations of the third aspect.

BRIEF DESCRIPTION OF DRAWINGS

FIG. 1A, FIG. 1B, FIG. 1C, and FIG. 1D are architectural diagrams of a communication system to which an embodiment of this application is applicable;
FIG. 2 is a diagram of several application scenarios of V2X according to an embodiment of this application;
FIG. 3 is a diagram of interlace resources according to an embodiment of this application;

FIG. 4 is a diagram of scheduling a resource by a base station according to an embodiment of this application;

FIG. 5 is a schematic flowchart of a communication method according to an embodiment of this application;

FIG. 6 is a diagram of resources according to an embodiment of this application;

FIG. 7 is a diagram of resources according to an embodiment of this application;

FIG. 8 is a diagram of resources according to an embodiment of this application;

FIG. 9 is a diagram of resources according to an embodiment of this application;

FIG. 10 is a diagram of resources according to an embodiment of this application;

FIG. 11 is a diagram of resources according to an embodiment of this application;

FIG. 12 is a diagram of resources according to an embodiment of this application;

FIG. 13 is a diagram of resources according to an embodiment of this application;

FIG. 14 is a schematic flowchart of a communication method according to an embodiment of this application;

FIG. 15 is a diagram of resources according to an embodiment of this application;

FIG. 16 is a diagram of resources according to an embodiment of this application;

FIG. 17 is a diagram of resources according to an embodiment of this application;

FIG. 18 is a diagram of resources according to an embodiment of this application;

FIG. 19 is a diagram of resources according to an embodiment of this application;

FIG. 20 is a diagram of resources according to an embodiment of this application;

FIG. 21 is a diagram of resources according to an embodiment of this application;

FIG. 22 is a diagram of resources according to an embodiment of this application;

FIG. 23 is a diagram of resources according to an embodiment of this application;

FIG. 24 is a diagram of a structure of a communication apparatus according to an embodiment of this application; and

FIG. 25 is a diagram of a structure of a communication apparatus according to an embodiment of this application.

DESCRIPTION OF EMBODIMENTS

The following describes embodiments of this application in detail with reference to the accompanying drawings of the specification.

A method provided in embodiments of this application may be applicable to, but is not limited to the following fields: a multicast broadcast service, dual-channel intelligent unicast (Dual-channel intelligent unicast, DC-IU), broadcast Broadcast, multicast Multicast, multicast broadcast (Multicast Broadcast), Groupcast, V2X, public safety (public safety), mission critical (mission critical), transparent internet protocol (internet protocol, IP) IPv4/IPv6 multicast delivery (transparent IPv4/IPv6 multicast delivery), software delivery over wireless (software delivery over wireless), group communication (group communication), internet of things (Internet of things, IoT), television (television, TV), television video (TV Video), linear television (linear TV), livestreaming (Live), a radio service (radio services), device to device (device to device, D2D), uncrewed driving (unmanned driving), autonomous driving (automated driving, ADS), driver assistance (driver assistance, ADAS), intelligent driving (intelligent driving), connected driving (connected driving), intelligent network driving (intelligent network driving), car sharing (car sharing), and the like. The method provided in embodiments of this application may be applied to communication between communication apparatuses, or may be applied to communication between a communication apparatus and a network device. In embodiments of this application, communication between terminal devices is used as an example for description. For communication between a terminal device and a network device, refer to embodiments of this application.

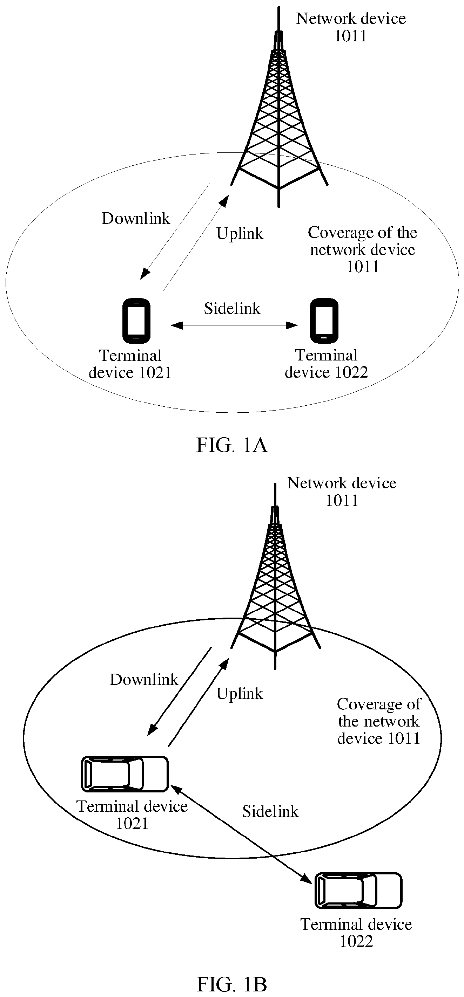

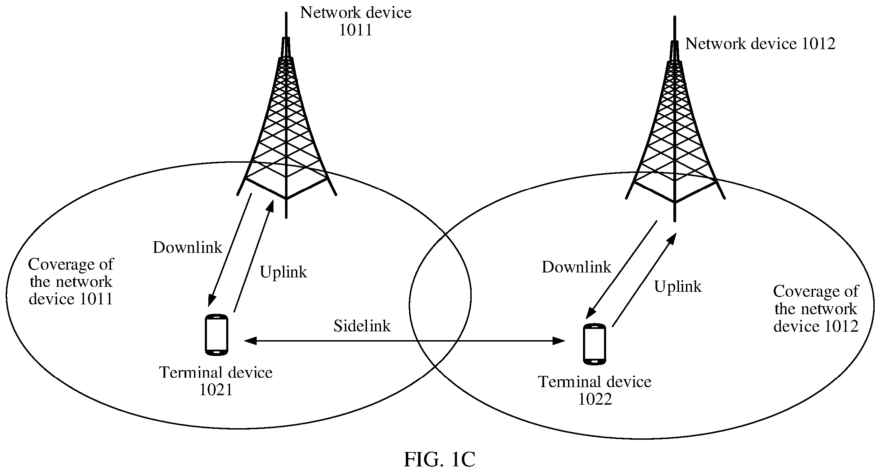

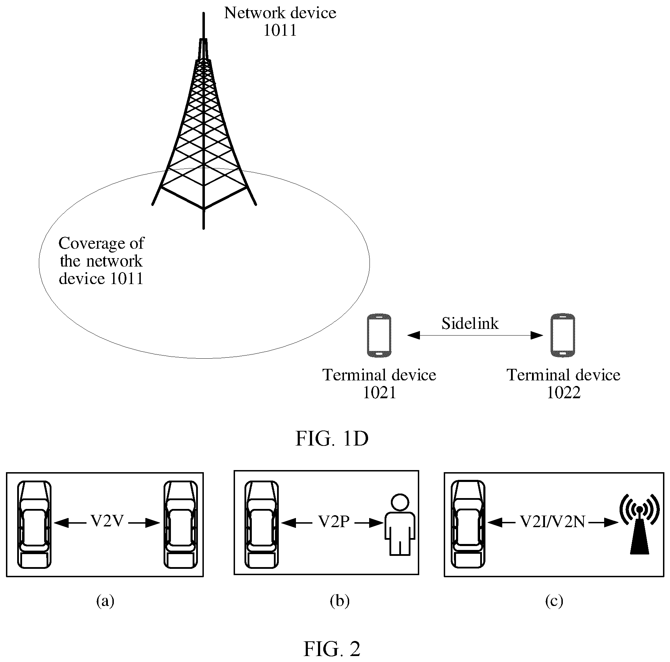

FIG. 1A to FIG. 1D are architectural diagrams of a communication system to which an embodiment of this application is applicable. As shown in FIG. 1A to FIG. 1D, the communication system may include a plurality of terminal devices (for example, a terminal device 1021 and a terminal device 1022), and optionally may further include one or more network devices (for example, a network device 1011 and a network device 1012). In FIG. 1A, the terminal device 1021 and the terminal device 1022 are located within coverage of a same network device (for example, the network device 1011). In FIG. 1B, the terminal device 1021 is located within coverage of a network device (for example, the network device 1011), and the terminal device 1022 is not within network coverage. In FIG. 1C, the terminal device 1021 and the terminal device 1022 are located within coverage of different network devices. For example, the terminal device 1021 is located within coverage of the network device 1011, and the terminal device 1022 is located within coverage of the network device 1012. In FIG. 1D, neither the terminal device 1021 nor the terminal device 1022 is within network coverage.

In the foregoing FIG. 1A to FIG. 1D, the terminal device 1021 and the terminal device 1022 may communicate with each other through a sidelink. In other words, the terminal device 1021 and the terminal device 1022 may communicate with each other through a PC5 interface. For example, the terminal device 1021 may send data to the terminal device 1022. In this case, the terminal device 1021 may be referred to as a transmit end terminal device or a transmit end, and the terminal device 1022 may be referred to as a receive end terminal device or a receive end. For another example, the terminal device 1022 may send data to the terminal device 1021, and in this case, the terminal device 1022 may be referred to as a transmit end terminal device or a transmit end, and the terminal device 1021 may be referred to as a receive end terminal device or a receive end.

Sidelink communication between the terminal device 1021 and the terminal device 1022 may be device-to-device (device-to-device, D2D) communication, may be LTE-V (LTE-Vehicle) communication, or may be V2X communication. The V2X communication refers to communication between a vehicle and any external object, including vehicle to vehicle (vehicle to vehicle, V2V) communication, vehicle to pedestrian (vehicle to pedestrian, V2P) communication, vehicle to infrastructure (vehicle to infrastructure, V2I) communication, vehicle to network (vehicle to network, V2N) communication, and the like. The V2V communication may be shown in (a) in FIG. 2, the V2P communication may be shown in (b) in FIG. 2, and the V2I communication or the V2N communication may be shown in (c) in FIG. 2.

It can be learned from FIG. 1A to FIG. 1D that the sidelink communication between the terminal device 1021 and the terminal device 1022 may support a scenario in which there is network coverage, or may support a scenario in which there is no network coverage. In a scenario shown in FIG. 1A to FIG. 1C in which the terminal device 1021 is within network coverage, when the terminal device 1021 serves as a transmit end, a resource used for sidelink communication may be scheduled by the network device. For example, the network device 1011 may indicate, to the terminal device 1021, a resource used for sidelink communication. In a scenario shown in FIG. 1D in which the terminal device 1021 is not within network coverage, or in a case in which the terminal device 1021 is within network coverage but does not use a network device scheduling mode, when the terminal device 1021 serves as a transmit end, the terminal device 1021 may select a resource used for sidelink communication, to be specific, the terminal device 1021 may select, from a resource pool, the resource used for sidelink communication. It should be understood that the resource in this application may be replaced with a time-frequency resource, and the time-frequency resource includes a time domain resource and/or a frequency domain resource.

The following describes in detail the terminal device and the network device in FIG. 1A to FIG. 1D.

(1) Terminal device

A communication apparatus in embodiments of this application may be a terminal device or a communication chip. For example, the terminal device may be a user-side entity configured to receive a signal, send a signal, or receive a signal and send a signal. The terminal device is configured to provide one or more of a voice service and a data connectivity service for a user. The terminal device may also be referred to as UE, an access terminal, a subscriber unit, a subscriber station, a mobile station, a mobile console, a remote station, a remote terminal, a mobile device, a user terminal, a terminal, a wireless communications device, a user agent, or a user apparatus. The terminal device may alternatively be a V2X device, for example, a smart car (smart car or intelligent car), a digital car (digital car), an uncrewed car (unmanned car, driverless car, pilotless car, or automobile), a self-driving car (self-driving car or autonomous car), a pure electric vehicle (pure EV or Battery EV), a hybrid electric vehicle (hybrid electric vehicle, HEV), a range extended electric vehicle (range extended EV, REEV), a plug-in hybrid electric vehicle (plug-in HEV, PHEV), a new energy vehicle (new energy vehicle), or a road side unit (road site unit, RSU). The terminal device may alternatively be a device in device to device (device to device, D2D) communication, for example, an electricity meter or a water meter. The terminal device may alternatively be a mobile station (mobile station, MS), a subscriber unit (subscriber unit), an uncrewed aerial vehicle, an internet of things (internet of things, IoT) device, a station (station, ST) in a WLAN, a cellular phone (cellular phone), a smartphone (smart phone), a cordless telephone set, a wireless data card, a tablet computer, a session initiation protocol (session initiation protocol, SIP) phone, a wireless local loop (wireless local loop, WLL) station, a personal digital assistant (personal digital assistant, PDA) device, a laptop computer (laptop computer), a machine type communication (machine type communication, MTC) terminal, a handheld device with a wireless communication function, a computing device, another processing device connected to a wireless modem, a vehicle-mounted device, or a wearable device (which may also be referred to as a wearable intelligent device). The terminal device may alternatively be a terminal in a next generation communication system, for example, a terminal in a 5G system, a terminal in a future evolved PLMN, or a terminal in an NR system. For example, the terminal device in embodiments of this application may alternatively be a mobile phone (mobile phone), a tablet computer (pad), a computer with a wireless receiving and sending function, a virtual reality (virtual reality, VR) terminal device, an augmented reality (augmented reality, AR) terminal device, a wireless terminal in industrial control (industrial control), a wireless terminal in self-driving (self driving), a wireless terminal in telemedicine (remote medical), a wireless terminal in a smart grid (smart grid), a wireless terminal in transportation safety (transportation safety), a wireless terminal in a smart city (smart city), or a wireless terminal in a smart home (smart home). An application scenario is not limited in embodiments of this application. In this application, a method and step implemented by the terminal device may also be implemented by a component (for example, a chip or a circuit) that may be used in the terminal device. In this application, the foregoing terminal device and a component (for example, a chip or a circuit) that may be disposed in the foregoing terminal device are collectively referred to as a terminal device.

If the various terminal devices described above are in a vehicle, for example, placed in the vehicle or mounted in the vehicle, the terminal devices may all be considered as vehicle-mounted terminal devices. For example, the vehicle-mounted terminal devices are also referred to as on-board units (on-board units, OBUs).

In embodiments of this application, an apparatus configured to implement a function of the terminal device may be a terminal device, or may be an apparatus that can support the terminal device in implementing the function, for example, a chip system, or a combined component or part that can implement the function of the terminal device. The apparatus may be installed in the terminal device. In embodiments of this application, the chip system may include a chip, or may include a chip and another discrete component. In the technical solutions provided in embodiments of this application, an example in which the apparatus configured to implement the function of the terminal is a terminal device is used for describing the technical solutions provided in embodiments of this application.

(2) Network device

The network device includes a radio access network device (which may also be referred to as an access network device). The network device may be a base station, an evolved base station (evolved NodeB, eNodeB), a transmission reception point (transmission reception point, TRP), a next generation base station (next generation NodeB, gNB) in a 5th generation (5th generation, 5G) mobile communication system, a base station in a 6th generation (6th generation, 6G) mobile communication system, a base station in a future mobile communication system, an access node in a wireless fidelity (wireless fidelity, Wi-Fi) system, or the like; or may be a module or unit that completes some functions of a base station, for example, may be a central unit (central unit, CU), or may be a distributed unit (distributed unit, DU). The network device may be a macro base station, may be a micro base station or an indoor base station, may be a relay node or a donor node, or the like. A network device in a V2X technology may be a road side unit (road side unit, RSU). The RSU may be a fixed infrastructure entity that supports a V2X application, and may exchange, through a sidelink, a message with another entity that supports the V2X application.

In embodiments of this application, an apparatus configured to implement a function of the network device may be a network device, or may be an apparatus that can support the network device in implementing the function, for example, a chip system or a combined component or part that can implement the function of the network device. The apparatus may be installed in the network device. In the technical solutions provided in embodiments of this application, an example in which the apparatus configured to implement the function of the network device is a network device is used for describing the technical solutions provided in embodiments of this application.

It may be understood that a quantity of network devices and a quantity of terminal devices included in the communication system are not limited in embodiments of this application. In addition to the network device and the terminal device, the foregoing communication system may further include another device, such as a core network device. This is also not limited in embodiments of this application. The communication system and a service scenario described in embodiments of this application are intended to describe the technical solutions in embodiments of this application more clearly, but constitute no limitation on the technical solutions provided in embodiments of this application. A person of ordinary skill in the art may learn that the technical solutions provided in embodiments of this application are also applicable to a similar technical problem as a communication network architecture evolves and a new service scenario emerges.

The following first describes related technical features in embodiments of this application. It should be noted that these explanations are intended to make embodiments of this application easier to understand, but should not be considered as a limitation on the protection scope claimed in this application.

## 1. Communication in an unlicensed spectrum

In a wireless communication system, spectrum resources may be classified into a licensed spectrum and an unlicensed spectrum. The licensed spectrum can be used only by a specific operator in a place, and the unlicensed spectrum can be used by any operator and is a shared spectrum resource.

The unlicensed spectrum may be used through technologies such as wireless fidelity (wireless fidelity, Wi-Fi), Bluetooth, and a wireless personal area network (Zigbee). In addition, in a cellular mobile communications technology (for example, a 5G communications technology), research is also performed on introduction of the unlicensed spectrum, for example, an NR-U technology.

The communication in the unlicensed spectrum needs to comply with some regulations, for example, listen-before-talk (listen-before-talk, LBT)-based channel access and occupied channel bandwidth (occupied channel bandwidth, OCB) requirements, to ensure access fairness between various devices running in the unlicensed spectrum.

## 2. LBT-based channel access

The LBT-based channel access generally uses energy-based detection and signal class detection. For example, an NR-U technology uses the energy-based detection. An energy detection threshold (energy detection threshold) needs to be set for the energy-based detection. When energy detected by a communication device exceeds the detection threshold, the communication device determines that a channel is busy, and does not allow access to the channel. In this case, it may be considered that LBT fails. When detected energy is less than the detection threshold for a period of time, the communication device determines that a channel is idle, and allows access to the channel. In this case, it may be considered that LBT succeeds. For example, the detected energy may be reference signal received power (reference signal received power, RSRP), and correspondingly, the detection threshold may be an RSRP threshold.

How to specifically perform LBT is not limited in this application, and examples are not described herein one by one.

### 3. Interlace resource

A channel may be divided into a plurality of subchannels or a plurality of interlace (interlace) resources. The sub-channel includes a plurality of consecutive resource blocks, and the interlace resource includes a plurality of inconsecutive resource blocks. An interlace resource m includes common resource blocks (common resource blocks, CRBs) {m, M+m, 2M+m, 3M+m, ...}. M is a quantity of interlace resources, m∈{0, 1, ..., M-1}, and m is a number or an index of the interlace resource. Optionally, a value of M is related to a subcarrier spacing (subcarrier spacing, SCS). For example, in a 20 MHz bandwidth, when the subcarrier spacing is 15 kilohertz (kHz), a value of M may be 10. For another example, in a 20 MHz bandwidth, when the subcarrier spacing is 30 kHz, a value of M may be 5. In this application, an interlace resource unit may be a resource block (resource block, RB), or may be another frequency domain resource unit. For ease of description, the CRB may be understood as an RB.

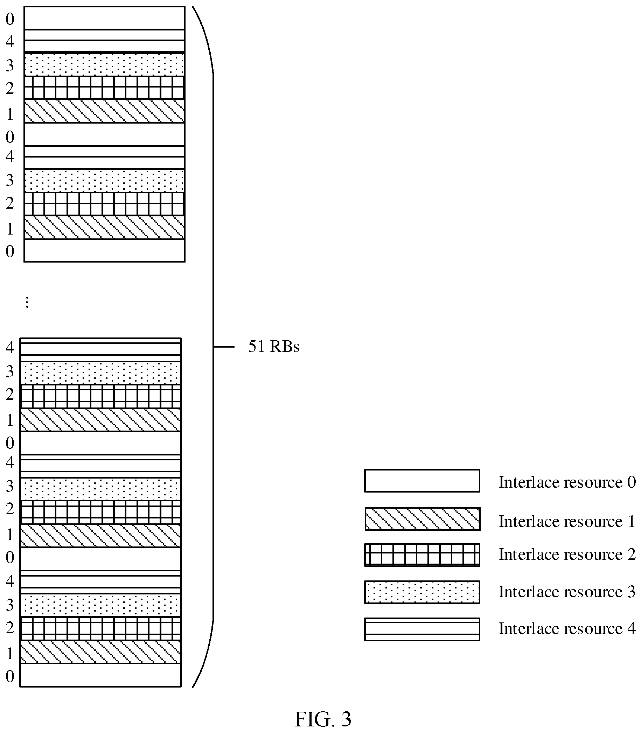

As shown in FIG. 3, in a 20 MHz bandwidth, there are 51 RBs in total when the subcarrier spacing is 30 kHz. There are a total of five interlace resources in the 51 RBs. An interlace resource 0 includes 11 white RBs shown in FIG. 3, and an interlace resource 1, an interlace resource 2, an interlace resource 3, and an interlace resource 4 each include 10 RBs shown in FIG. 3 with different shadows.

In an example of a 20 MHz bandwidth and a 30 kHz subcarrier spacing, if a sub-channel (subchannel) includes 10 consecutive RBs, there are five sub-channels (the remaining one RB is idle). If a terminal device performs sending on one sub-channel, an occupied bandwidth is about 4 MHz, and an OCB requirement that "a channel bandwidth occupies at least 80% of a nominal channel bandwidth" is not met. If sending is performed by using an interlace resource, and FIG. 3 is still used as an example, if sending is performed on the interlace resource 1, an occupied channel bandwidth is about 20 MHz, that is, 100% nominal channel bandwidth. If sending is performed on the interlace resource 2, an occupied channel bandwidth is about 18 MHz, that is, about 46/51≈90% bandwidth.

### 4. Sidelink communication

A sidelink may also be referred to as a sidelink. In the sidelink communication, a transmit end terminal device may send sidelink information to a receive end terminal device. The sidelink information may also be referred to as sidelink information. A resource used for sidelink communication or a resource used to carry the sidelink information may be referred to as a sidelink resource.

As described above, the network device may allocate a resource to the terminal device, so that the terminal device may perform sidelink communication by using the resource allocated by the network device. In this case, the resource used by the terminal device may be a resource in a licensed spectrum (that is, a licensed resource), in other words, the terminal device performs sidelink communication in the licensed spectrum. Alternatively, the terminal device may select a resource from a resource pool, and perform sidelink communication by using the selected resource. In this case, the resource used by the terminal device may be a resource in an unlicensed spectrum (that is, an unlicensed resource), in other words, the terminal device performs sidelink communication in the unlicensed spectrum. A scenario in which the terminal device performs sidelink communication in the unlicensed spectrum may be referred to as SL-U.

### 5. Sidelink information

In embodiments of this application, information transmitted through a sidelink may be referred to as sidelink information. For example, the sidelink information may include sidelink control information (sidelink control information, SCI) and/or sidelink data. It may be understood that the sidelink information may alternatively include other possible information. In embodiments of this application, an example in which the sidelink information includes SCI and/or sidelink data is used for description.

The SCI may be carried on a physical sidelink control channel (physical sidelink control channel, PSCCH) and/or a physical sidelink shared channel (physical sidelink shared channel, PSSCH), and the sidelink data may be carried on the PSSCH. The SCI carried on the PSCCH may be referred to as first stage SCI, and the SCI carried on the PSSCH may be referred to as second stage SCI.

Further, a unit of scheduling granularity of the PSCCH or the PSSCH in time domain is one time unit, and a unit of the scheduling granularity in frequency domain is one frequency domain unit or a plurality of consecutive frequency domain units. In other words, a resource used by the terminal device to perform sidelink communication needs to be an integer multiple of a time unit in time domain, and needs to be an integer multiple of a frequency domain unit in frequency domain. One time unit may be one slot (slot) or one mini-slot (mini-slot). This is not specifically limited. In embodiments of this application, an example in which one time unit is one slot is used for description. One frequency domain unit may be one RB, a plurality of RBs, one sub-channel, a plurality of sub-channels, one interlace resource, or a plurality of interlace resources. This is not specifically limited. In embodiments of this application, an example in which one frequency domain unit is one sub-channel is used for description.

A relationship between a channel, a sub-channel, and an interlace resource is explained and described here.

The channel may be a carrier or a part of a carrier that to be accessed by the terminal device in an unlicensed spectrum in a channel access procedure. For example, a channel bandwidth is 20 MHz. To avoid interference between different channels, a protocol specifies that the terminal device cannot send data in the entire 20 MHz bandwidth, but reserves some frequency band resources as a guard bandwidth (guard band). In other words, the terminal device sends data only on some frequency domain resources other than the guard bandwidth. The some available frequency domain resources are referred to as a resource block set (that is, an RB set). Therefore, a channel may be a resource block set (RB set). When a location and a size of the guard bandwidth are determined, a start RB location, an end RB location, and a quantity of RBs in the RB set are also determined accordingly. In addition, when the terminal device performs an LBT operation on a plurality of consecutive 20 MHz channels and successfully accesses the channel, a guard bandwidth between two RB sets may be used to transmit data, thereby improving resource utilization.

The channel may include one or more sub-channels. In the unlicensed spectrum, after accessing the channel, the terminal device may perform information transmission on some or all sub-channels included in the channel. Alternatively, the channel may include one or more interlace resources. In the unlicensed spectrum, after accessing the channel, the terminal device may perform information transmission on some or all interlace resources included in the channel.

For example, for an interleaved transmission mode, if the frequency domain unit is one sub-channel, the sub-channel may include one interlace resource, and the one sub-channel includes a plurality of inconsecutive RBs. For a non-interleaved transmission mode, if the frequency domain unit is one sub-channel, the sub-channel may include a plurality of consecutive RBs.

## 6. Sidelink resource pool

A resource pool (resource pool) may also be referred to as an SL resource pool. Optionally, the resource pool may be preconfigured. For example, within network coverage, the network device sends resource pool information to a terminal device in a cell by using a system information block (system information block, SIB), cell-specific (cell-specific) radio resource control (radio resource control, RRC) signaling, or UE-specific (UE-specific) RRC signaling. The resource pool information indicates the resource pool. Alternatively, the resource pool may be predefined.

The resource pool may include one or more time units in time domain. When the resource pool includes a plurality of time units in time domain, the plurality of time units may be consecutive or discrete. The resource pool may include one or more frequency domain units in frequency domain. In addition, the resource pool may include at least one channel. For example, if the resource pool includes one channel, and a channel bandwidth is 20 MHz, a bandwidth of the resource pool is 20 MHz. For another example, if the resource pool includes two channels, and a channel bandwidth is 20 MHz, a bandwidth of the resource pool is 40 MHz. Alternatively, the resource pool may include at least one resource block set (that is, an RB set). For a meaning of the RB set, refer to the foregoing descriptions.

After accessing the channel, the terminal device may share a spectrum with another terminal device, and send, to the another terminal device, shared information corresponding to a resource shared within a COT, including a corresponding moment and a frequency domain location. The shared information includes a time domain location and a frequency domain location that are corresponding to the shared resource. After receiving the shared information, the another terminal device may send information at the specified time domain location by using a frequency domain resource at the specified frequency domain location.

## 7. Selection and reservation of a sidelink resource

As described above, the terminal device may select a resource from a resource pool. For example, the terminal device may first select a resource from the resource pool and reserve the resource, and then send sidelink information on the reserved resource after completing channel access.

In an example, after selecting the resource from the resource pool, the terminal device may send SCI. The SCI indicates a resource (including a time domain resource and a frequency domain resource) of the sidelink information sent by the terminal device. After receiving the SCI of the terminal device, another terminal device may learn of the resource reserved by the terminal device, so that when selecting a resource, the another terminal device may exclude the resource reserved by the terminal device.

In an implementation, the terminal device needs to select a resource before performing LBT. In sidelink communication, there are two resource selection manners: a mode 1 (Mode 1) and a mode 2 (Mode 2). The mode 1 is a mode based on scheduling performed by a base station, and the mode 2 is a mode in which a user selects a resource. Because the terminal device in SL-U has sensing and resource selection capabilities, the mode 2 is usually used to implement resource selection. Therefore, a resource selection process in the mode 2 is described in embodiments of this application. For example, a process in which the terminal device triggers the mode 2 in a slot a to select a resource includes the following steps:

Step 2-1: The terminal device determines a resource selection window (resource selection window, RSW) [a + $T_1$, a + $T_2$], $0 \leq T_1 \leq T_{proc,1}^{SL}$ , and $T_{2min} \leq T_2 \leq$ a packet delay budget (packet delay budget, PDB), where $T_{proc,1}^{SL}$ is a delay in processing resource selection and data sending by the terminal device, $T_1$ and $T_2$ depend on implementation of the device and represent a left boundary and a right boundary of the resource selection window, and a value of $T_{proc,1}^{SL}$ is in one-to-one correspondence with a subcarrier spacing $\mu_{SL}$ used for transmission, as shown in Table 1 below.

Table 1

| $\mu_{SL}$ | $T_{proc,1}^{SL}/T_{proc,0}^{SL}$ (slots) |
|---|---|
| 0 | 1 |
| 1 | 1 |
| 2 | 2 |
| 3 | 4 |

Step 2-2: The terminal device determines a sensing window [a - $T_0$, $a- T_{proc,0}^{SL}$ ), where $T_{proc,0}^{SL}$ is a delay in processing a sensing result by the terminal device, $T_0$ represents a left boundary of the sensing window, and a value of $T_{proc,0}^{SL}$ is also in one-to-one correspondence with the subcarrier spacing $\mu_{SL}$ used for transmission, as shown in Table 3.

Step 2-3: The terminal device determines a reference signal received power (reference signal received power, RSRP) threshold, where the RSRP threshold is related to a priority ($prio_{TX}$) of to-be-sent data and a priority ($prio_{TX}$) indicated by received sidelink control information (sidelink control information, SCI), and is specifically an RSRP threshold corresponding to a $prio_{RX}$ + ($prio_{TX}$ - 1) * 8th sequence number (index) in an RSRP threshold set configured for the resource pool.

Step 2-4: The terminal device initializes an available resource set SA as all time-frequency resource elements in a resource selection box, where one time-frequency resource element is one slot and one sub-channel.

Step 2-5: Exclude a time-frequency resource from the SA when the time-frequency resource satisfies all the following conditions:

Condition 1-1: A slot, that is, a slot in which the terminal device is in a sending state, is not sensed in the sensing window. Because the terminal device is limited by a half-duplex transceiver, when the terminal device is in the sending state, the terminal device cannot perform reception. Therefore, the sending slot cannot be sensed.

Condition 1-2: It is assumed that there is SCI sent by another terminal device in the slot, the SCI indicates a periodic resource reservation, and the periodic resource reservation corresponds all sub-channels that are in a slot in the selection window. A periodic resource reservation value used by the SCI includes periodic reservation values configured for all resource pools.

Step 2-6: If remaining time-frequency resources in the SA after exclusion are less than X% of total resources in the resource selection window, where a value of X% is configured by the resource pool, perform step 2-4 again to initialize the resource set, and if a re-initialized SA is consistent with the previously initialized SA, perform step 2-7.

Step 2-7: Exclude a time-frequency resource from the SA when the time-frequency resource satisfies all the following conditions:

Condition 2-1: Received first stage SCI is successfully decoded.

Condition 2-2: Perform RSRP measurement for a PSSCH demodulation reference signal (demodulation reference signal, DMRS) included in a time-frequency resource that is reserved by using the received first stage SCI and that is used for physical sidelink shared channel (physical sidelink shared channel, PSSCH) transmission, where the RSRP result is greater than the RSRP threshold determined in step 2-3, and the PSSCH time-frequency resource further includes a periodically reserved time-frequency resource and time-frequency resource reserved by using a time resource indicator value (time resource indicator value, TRVI) and a frequency resource indicator value (frequency resource indicator value, FRVI).

Condition 2-3: A time-frequency resource reserved by using the received first stage SCI (including a time-frequency resource reserved in a plurality of consecutive periods and time-frequency resources reserved by using the TRVI and the FRVI) is in the resource selection window.

Step 2-8: If remaining time-frequency resources in the SA after exclusion are less than X% of total resources in the resource selection window, increase the RSRP threshold determined in step 2-3, for example, by 3 decibels (decibel, dB) each time, until the remaining time-frequency resources in the SA after exclusion are greater than or equal to X% of the total resources in the resource selection window.

After selecting a resource based on the foregoing step 2-1 to step 2-8, the terminal device may notify another terminal device of the reserved resource by using the SCI, and the terminal device completes the LBT before using the reserved resource, to send data on a specified time-frequency resource.

**8. Base station scheduling mode**

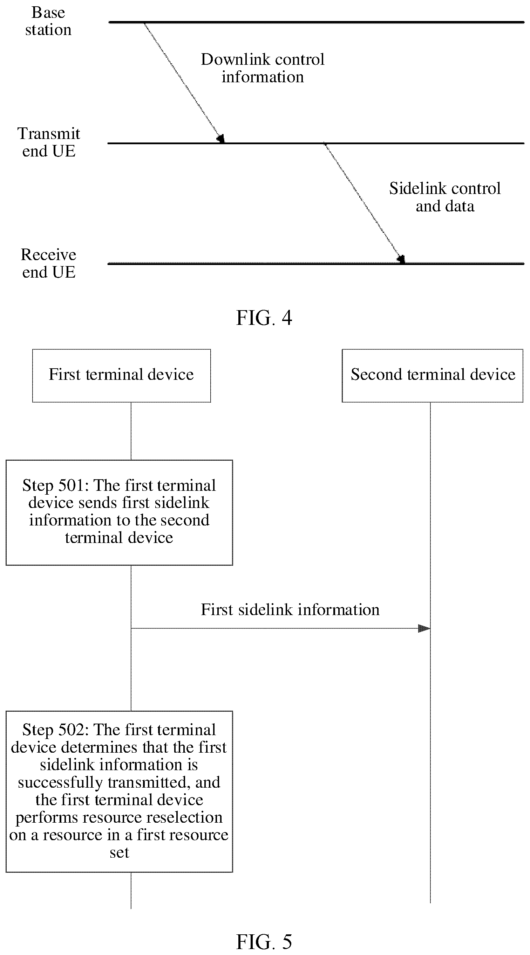

In addition to the foregoing manner in which the terminal device may select a resource from the resource pool, in a scenario in which a base station exists, there may alternatively be a base station scheduling mode. For example, the base station performs dynamic scheduling, and the base station (gNB) centrally allocates resources based on a buffer status report (Buffer Status Report, BSR) status of UE. Specifically, the base station notifies transmit end UE of a time-frequency resource of slidelink data by using downlink control information (Downlink Control Information, DCI). After receiving the DCI, the transmit end UE sends sidelink control information (Sidelink Control Information, SCI) and data to receive end UE on a resource indicated by the DCI, as shown in FIG. 4. In a transmission mode 1, sidelink transmission resources of UE are uniformly scheduled by the base station, so that collision can be avoided.

Resources that need to be used for initial transmission and retransmission of same data also need to be indicated by the gNB to the UE. Therefore, when determining that initially transmitted data is successfully transmitted, the UE reports transmission success information to the gNB, and the gNB does not re-schedule a resource that needs to be retransmitted, and the UE does not send information on a scheduled retransmission resource. Consequently, a problem of discontinuous sending of information still occurs.

A corresponding solution is as follows: When the gNB receives an ACK (carried in a PUCCH) reported by the UE, if the gNB already allocates a resource to the UE for retransmission, the gNB re-schedules a resource that does not need to be used to another UE, or schedules a resource that does not need to be used to the UE, and indicates the UE to send other information.

**9. Physical sidelink feedback channel (physical sidelink feedback channel, PSFCH) feedback**

V2X supports physical hybrid automatic repeat request (hybrid automatic repeat request, HARQ) acknowledgment (acknowledge, ACK) feedback. To be specific, for one PSSCH transmission, if a transmit end user carries HARQ-ACK feedback enabling information in control information, a receive end user needs to feed back corresponding ACK/negative acknowledge (negative acknowledge, NACK) information according to a PSSCH decoding result, where the ACK/NACK information is transmitted through the PSFCH. A PSFCH resource may be a periodic resource configured in a resource pool, or may be a dynamically obtained resource.

If a PSFCH feedback resource is configured in the resource pool, the PSFCH feedback resource is configured once every N slots. Due to a limitation of a decoding capability of the receive end user, the receive end user cannot immediately perform feedback after receiving a PSSCH. Therefore, a PSSCH feedback time interval K is defined. To be specific, the PSSCH transmits a PSFCH in the 1st available slot including a PSFCH resource, there are at least K slots between the slot and a slot in which the PSSCH is located, and a value of K is configured.

If the PSFCH resource is dynamically obtained, especially for an unlicensed band, the transmit end user obtains a resource of the unlicensed band through a channel access procedure, and then shares the obtained resource of the unlicensed band with the receive end user, so that the receive end user performs corresponding feedback on a previously sent PSSCH.

It can be learned from the foregoing descriptions that, before communication is performed in the unlicensed spectrum, the resource may be first selected in the resource pool. The terminal device may select both an initial transmission resource and a retransmission resource. When the terminal device completes channel access (that is, LBT), and performs data transmission on the selected resource, if an initially transmitted data packet is correctly received by the receive end, the terminal device no longer uses the selected retransmission resource. However, once the selected retransmission resource is no longer used, the resource selected by the terminal device may be idle in time domain. Consequently, data transmission of the terminal device is interrupted, and data transmission reliability is reduced.

For example, after the terminal device obtains one COT, a sidelink resource within the COT may be used by the terminal device to perform initial transmission and retransmission of data. When the initial transmission of the sidelink data succeeds, there may be no information to be sent on a reserved retransmission resource, and a resource idle problem occurs. When an idle interval is greater than 16 μs, the COT may be preempted by another terminal apparatus through a channel access procedure (including Type1 LBT and Type2 LBT). Consequently, the COT of the terminal device is lost.

Based on this, in embodiments of this application, implementation of performing sidelink communication by a terminal device in an unlicensed spectrum is studied. For example, embodiments of this application provide some communication methods, to resolve a problem that a COT is lost when a resource selected by the terminal device is no longer used.

FIG. 5 is a schematic flowchart of a communication method according to an embodiment of this application. The method includes the following steps:

Step 501: A first terminal device sends first sidelink information to a second terminal device.

Before sending the first sidelink information, the first terminal device selects a plurality of resources from a sidelink resource pool as a first resource set. The first resource set selected by the first terminal device is used to transmit a plurality of pieces of sidelink information, and the plurality of pieces of sidelink information include the first sidelink information. In other words, the first resource set includes a resource used to initially transmit the first sidelink information. The first resource set further includes at least one first resource used to retransmit the first sidelink information.

In this application, the plurality of resources included in the first resource set are at least one group of resources, and each group of resources in the at least one group of resources are consecutive in time domain, in other words, two adjacent resources in each group of resources are consecutive in time domain. To be specific, the first terminal device selects one or more groups of consecutive resources from the sidelink resource pool, and the one or more groups of consecutive resources are referred to as the first resource set.

In this application, each resource in the first resource set may occupy one time unit in time domain, and may occupy at least one frequency domain unit in frequency domain. The time unit may be a slot, a mini-slot, or a subframe, and the frequency domain unit may be a sub-channel or an interlace resource. In the following description of this application, an example in which the time unit is a slot and the frequency domain unit is a sub-channel or an interlace resource is used for description. For the interlace resource, refer to the foregoing descriptions.

In this application, if two resources are described as consecutive, it means that the two resources are adjacent in time domain. For example, two slots corresponding to the two resources are adjacent in time domain. If a plurality of resources are described as consecutive, it means that the plurality of resources are adjacent in time domain, to be specific, a plurality of slots corresponding to the plurality of resources are adjacent in time domain, and there is no slot other than the plurality of slots between two adjacent slots in the plurality of slots.

In this application, before sending the first sidelink information, the first terminal device performs LBT. Specifically, before using a resource selected from an unlicensed band, the terminal device needs to first perform a channel access procedure to obtain a channel resource. When the LBT succeeds, the first terminal device successfully accesses a channel, so that the first terminal device can send information on the plurality of resources previously selected by the first terminal device. After the first terminal device accesses the channel, total duration in which the first terminal device occupies the channel is a COT.

In this application, the at least one group of resources are consecutive resources selected by the terminal device. Before using the resources, the terminal device needs to perform channel access. When the channel access succeeds, the terminal device obtains one channel occupancy time (COT). In this case, a group of resources is within the COT.

In this application, for the at least one group of resources, a channel access procedure needs to be performed before a plurality of groups of resources are used. When all channel access procedures are successful, a plurality of COTs are correspondingly obtained. In other words, for one group of resources, one COT is correspondingly obtained when channel access succeeds.

In this application, the at least one first resource may exist in a group of resources, or may exist in different resource groups in a distributed manner. This is not limited herein.

In this application, the at least one group of resources are resources that are selected by the first terminal device and that are used to transmit initial transmission and retransmission information, and may include at least one first resource. For example, the first resource set includes two resource groups. A first resource group includes five consecutive resources, one of which is used to retransmit the first sidelink information. A second resource group includes three consecutive resources, one of which is also used to retransmit the first sidelink information. In other words, both the first resource group and the second resource group include one first resource.

The one or more groups of resources selected by the first terminal device are consecutive, because in the unlicensed band, before using a selected or reserved resource, the terminal device needs to perform a channel access procedure to obtain a channel. Therefore, if a group of resources consecutive in time domain are selected for data transmission, only one channel access needs to be performed on a group of data that needs to be transmitted. This effectively reduces channel access frequency, improves resource use efficiency, and further improves system performance.

Step 502: The first terminal device determines that the first sidelink information is successfully transmitted, and the first terminal device performs resource reselection on a resource in the first resource set.

In this application, there may be a plurality of implementations for the first terminal device to determine that the first sidelink information is successfully transmitted.

Implementation 1: The second terminal device performs feedback in an ACK/NACK manner, if the second terminal device unsuccessfully decodes the first sidelink information, the second terminal device feeds back a NACK to the first terminal device by using a first feedback resource; or if the second terminal device correctly decodes the first sidelink information, the second terminal device feeds back an ACK to the first terminal device by using a first feedback resource. In this implementation, if the first terminal device receives, on the first feedback resource, an ACK corresponding to the first sidelink information, the first terminal device determines that the first sidelink information is successfully transmitted; or if the first terminal device receives, on the first feedback resource, a NACK corresponding to the first sidelink information, the first terminal device determines that the first sidelink information is unsuccessfully sent. The first feedback resource is used to feed back whether the first sidelink information is successfully received, and the first feedback resource is located before the first resource in time domain. In other words, the feedback resource is located before a retransmission resource in time domain, so that the first terminal device determines, based on feedback information, whether to perform retransmission.

Implementation 2: If the second terminal device performs feedback in a NACK only manner, and the second terminal device unsuccessfully decodes the first sidelink information, the second terminal device feeds back a NACK to the first terminal device by using a first feedback resource; or if the second terminal device correctly decodes the first sidelink information, the second terminal device does not feed back any information. In this implementation, if the first terminal device does not receive, on the first feedback resource, the NACK corresponding to the first sidelink information, the first terminal device determines that the first sidelink information is successfully transmitted; or if the first terminal device receives, on the first feedback resource, the NACK corresponding to the first sidelink information, the first terminal device determines that the first sidelink information is unsuccessfully sent.

In this application, how the first terminal device triggers the resource reselection is not limited. For example, a physical layer of the first terminal device may trigger a medium access control (medium access control, MAC) layer of the first terminal device to perform resource reselection on the resource in the first resource set.

In this application, the performing resource reselection on a resource in the first resource set may mean that the first terminal device reselects a group of resources to replace some or all resources that are not used in the first resource set. For example, the first resource set includes a resource A and a resource B, the first terminal device performs resource reselection on the resource A and the resource B, and the first terminal device obtains a resource C and a resource D through resource reselection. If the first terminal device replaces the resource A with the resource C, and replaces the resource B with the resource D, information originally transmitted by using the resource A is transmitted by using the resource C, and information originally transmitted by using the resource B is transmitted by using the resource D.

The resources included in the first resource set are a group of consecutive resources or at least two groups of consecutive resources. Therefore, the consecutive resources include at least one first resource, that is, include at least one resource used to retransmit the first sidelink information. When determining that the initial transmission of the first sidelink succeeds, the first terminal apparatus does not send the retransmission information on a preconfigured resource used for retransmission, that is, the at least one first resource. In this case, no information is sent on the at least one first resource. According to a channel access rule of an unlicensed spectrum, this idle resource may be obtained by another terminal device through a channel access procedure. Consequently, the first terminal apparatus loses another resource in a subsequent first resource.

In this application, the channel access procedure is a type 1 channel access procedure and a type 2 channel access procedure. Details are not described herein again.

In this application, the LBT may be replaced by a channel access procedure. In the unlicensed band, a purpose of performing the LBT is for channel access to obtain a channel resource, and the channel access procedure is also for channel access to obtain the channel resource.

In this application, there may be a plurality of implementations for specific resources in the first resource set on which resource reselection is performed. In an implementation, the first terminal device performs resource reselection on a resource located after the first feedback resource in the first resource set.

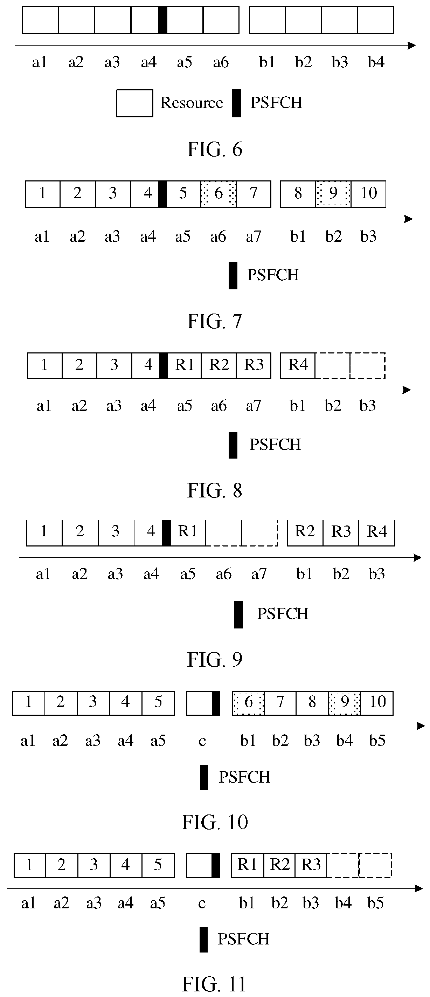

For example, as shown in FIG. 6, the first resource set includes 10 resources: a resource 1 to a resource 10. The resource 1 to the resource 6 are a group of consecutive resources and are respectively corresponding to a slot a1 to a slot a6. The resource 7 to the resource 10 are a group of consecutive resources and are respectively corresponding to a slot b1 to a slot b4. The first feedback resource (that is, a PSFCH in FIG. 6) is in the slot a4. For example, the first feedback resource is the last one or more symbols in the slot a4. It is assumed that the resource 1 is used to initially transmit the first sidelink information, and the resource 6 and the resource 8 are used to retransmit the first sidelink information. After the first terminal device determines, by using the feedback information on the first feedback resource, that the first sidelink information is successfully transmitted, the first terminal device may perform resource reselection on the resource located after the first feedback resource (that is, the resource 5 to the resource 10).

In another implementation, the first terminal device performs resource reselection on a second resource and a resource located after the second resource in the first resource set, where the second resource is the 1st first resource in the at least one first resource in time domain.

For example, with reference to FIG. 6 described above, the at least one first resource includes the resource 6 and the resource 8. After the first terminal device determines, by using the feedback information on the first feedback resource, that the first sidelink information is successfully transmitted, the first terminal device may perform resource reselection on 10 resources: the resource 6 (the 1st first resource) to the resource 10.

In this application, the first terminal device may perform resource reselection in the sidelink resource pool, and a resource obtained by the first terminal device through resource reselection may enable the resources selected by the first terminal device to be consecutive within a current COT. The first terminal device may perform resource reselection on the resource in the first resource set to determine a second resource set, in other words, obtain the second resource set through resource reselection. After the resource reselection, the first terminal device may send second sidelink information on a resource in the second resource set. Data in the second sidelink information is different from data in the first sidelink information.

That data in the second sidelink information is different from data in the first sidelink information specifically means: The first sidelink information is carried in a transport block 1 (TB 1), and the first sidelink information is carried in a transport block 2 (TB 2).

In an implementation, the first terminal device performs resource reselection on M resources in the first resource set, to obtain the second resource set. The second resource set includes N resources. N and M are integers greater than 0.

In a possible implementation, the N resources are consecutive in time domain.

Further, the reselected N resources and at least one resource other than the M resources in the first resource set are consecutive in time domain, so that it can be ensured that the reselected resources are also consecutive for UE.

In a possible implementation, when the N resources include at least two groups of resources, each group of resources in the at least two groups of resources are consecutive in time domain.

Further, one group of resources in the at least two groups of resources and at least one resource other than the M resources in the first resource set are consecutive in time domain.

In a possible implementation, if the M resources in the first resource set are used to transmit at least one piece of sidelink information and retransmit the first sidelink information, the N resources obtained through the resource reselection are used to transmit the at least one piece of sidelink information. Because the first sidelink information is successfully transmitted, the N resources do not include a resource used to retransmit the first sidelink information. In other words, N is less than M. For example, if a quantity of resources used to retransmit the first sidelink information which are located after the first feedback resource is Nc, N may satisfy the following form: N=M-Nc.

The N resources obtained by the first terminal device through the resource reselection may include at least one same resource as the M resources in the first resource set, or may not include a same resource. In a possible implementation, the first terminal device may use first N resources in the M resources in time domain as the N resources obtained through the resource reselection. For example, if the M resources are sequentially a resource 1 to a resource M in time domain, when performing the resource reselection, the first terminal device uses the resource 1 to a resource N as the N resources obtained through the resource reselection.

According to the foregoing method, when the first sidelink information is successfully transmitted, the first terminal device may perform resource reselection. Because a reselected resource can ensure resource continuity, a COT of a channel occupied by the first terminal device is not lost, so that data transmission interruption is avoided, data transmission reliability is improved, and quality of service (quality of service, QoS) of data transmission in the unlicensed band is ensured.

The following describes the foregoing process in detail with reference to several specific examples.

Example 1: The first feedback resource and at least one resource in the first resource set are consecutive. In other words, the first feedback resource is within the COT of the channel occupied by the first terminal device.

As shown in FIG. 7, the first resource set includes 10 resources: a resource 1 to a resource 10. The resource 1 to the resource 7 are a group of consecutive resources and are respectively corresponding to a slot a1 to a slot a7. The resource 8 to the resource 10 are a group of consecutive resources and are respectively corresponding to a slot b1 to a slot b3. It is assumed that the resource 1 is used to initially transmit the first sidelink information, and the resource 6 and the resource 9 are first resources used to retransmit the first sidelink information. The first feedback resource (that is, a PSFCH in FIG. 7) is in the slot 4. In other words, the first feedback resource and the resource 6 are in a same group of consecutive resources.

The first terminal device completes channel access by performing the LBT before the slot a1, the COT obtained by the first terminal device includes the slot a1 to the slot a7, and the first terminal device starts to perform data transmission in the slot a1.

The first terminal device sends the first sidelink information on the resource 1 in the slot a1. After the first terminal device determines, in the PSFCH in the slot a4, that the first sidelink information is successfully transmitted, the physical layer of the first terminal device instructs the MAC layer of the first terminal device to perform resource reselection, to maintain COT continuity.

Specifically, the first terminal device performs resource reselection on resources located after the first feedback resource (namely, the resource 5 to the resource 10), and reselects four resources: a resource R1 to a resource R4. The first terminal device does not need to retransmit the first sidelink information. Therefore, the resource R1 to the resource R4 do not include a resource used to retransmit the first sidelink information.

In an implementation, the reselected resources are arranged forward, and it is preferentially ensured that the reselected resources and a group of resources that include the first feedback resource are consecutive. For example, as shown in FIG. 8, the resource R1 is in the slot a5, the resource R2 is in the slot a6, the resource R3 is in the slot a7, and the resource R4 is in the slot b1 (the resource R4 may alternatively be in the slot b2 or the slot b3). The originally selected resource 8 to resource 10 may no longer be used, and the first terminal device may not transmit data in the slot b2 and the slot b3. In this way, it can be ensured that current COT time remains unchanged, and current data transmission is not affected.

The resource R1 and the resource 5 may be a same resource, or may be different resources. When the resource R1 and the resource 5 are different resources, although the resource R1 and the resource 5 occupy a same slot, occupied sub-channels or interlace resources are different. The resource R2 and the resource 6 may be a same resource, or may be different resources. The resource R3 and the resource 7 may be a same resource, or may be different resources. The resource R4 and the resource 8 may be a same resource, or may be different resources.

In an implementation, the reselected resources are arranged backward, and it is preferentially ensured that the reselected resource and a resource other than a group of resources that include the first feedback resource are consecutive. For example, as shown in FIG. 9, the resource R1 is in the slot a5, the resource R2 is in the slot b1, the resource R3 is in the slot b2, and the resource R4 is in the slot b3. The originally selected resource 6 to resource 10 may no longer be used, and the first terminal device may not transmit data in the slot a6 and the slot a7.

The resource R1 and the resource 5 may be a same resource or may be different resources. The resource R2 and the resource 8 may be a same resource or may be different resources. The resource R3 and the resource 9 may be a same resource or may be different resources. The resource R4 and the resource 10 may be a same resource or may be different resources.

In this example, information originally transmitted by using the resource 5, the resource 7, the resource 8, and the resource 10 is transmitted by using the resource R1 to the resource R4. For example, information originally transmitted by using the resource 5 is transmitted by using the resource R1, information originally transmitted by using the resource 7 is transmitted by using the resource R2, information originally transmitted by using the resource 8 is transmitted by using the resource R3, and information originally transmitted by using the resource 10 is transmitted by using the resource R4. Certainly, a transmission sequence of the foregoing information may also be changed. This is not limited in this application.

After completing data transmission in the current COT, the first terminal device may complete channel access again by performing the LBT before the slot b1. The COT obtained by the first terminal device includes the slot b1 to the slot b3, and the first terminal device starts to perform data transmission in the slot b1. A specific process is not described again.

Example 2: The first feedback resource and a resource in the first resource set are inconsecutive. In other words, the first feedback resource is not within the COT of the channel occupied by the first terminal device.

As shown in FIG. 10, the first resource set includes 10 resources: a resource 1 to a resource 10. The resource 1 to the resource 5 are a group of consecutive resources and are respectively corresponding to a slot a1 to a slot a5. The resource 6 to the resource 10 are a group of consecutive resources and are respectively corresponding to a slot b1 to a slot b5. It is assumed that the resource a1 is used to initially transmit the first sidelink information, and the resource 6 and the resource 9 are used to retransmit the first sidelink information. The first feedback resource (that is, a PSFCH in FIG. 10) is in a slot c, and the slot c is between the slot a5 and the slot b1. In other words, the first feedback resource and the resource in the first resource set are inconsecutive.

The first terminal device completes channel access by performing the LBT before the slot a1, the COT obtained by the first terminal device includes the slot a1 to the slot a5, and the first terminal device starts to perform data transmission in the slot a1.

The first terminal device sends the first sidelink information on the resource 1 in the slot a1. After the first terminal device determines, in the PSFCH in the slot c, that the first sidelink information is successfully transmitted, the physical layer of the first terminal device instructs the MAC of the first terminal device to perform resource reselection, to maintain COT continuity.

Specifically, the first terminal device performs resource reselection on resources located after the first feedback resource (namely, the resource 6 to the resource 10), and reselects three resources: a resource R1 to a resource R3. The originally selected resource 6 to resource 10 may no longer be used. The first terminal device does not need to retransmit the first sidelink information. Therefore, the resource R1 to the resource R3 do not include a resource used to retransmit the first sidelink information.

In an implementation, the reselected resources are arranged forward. For example, as shown in FIG. 11, the resource R1 is in the slot b1, the resource R2 is in the slot b2, and the resource R3 is in the slot b3.

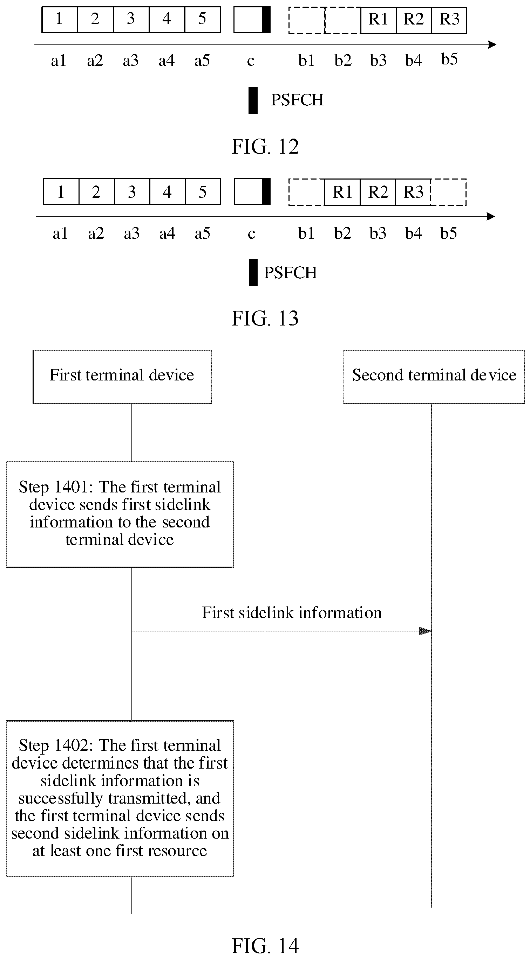

In an implementation, the reselected resources are arranged backward. For example, as shown in FIG. 12, the resource R1 is in the slot b3, the resource R2 is in the slot b4, and the resource R3 is in the slot b5.

In an implementation, locations of the reselected resources are not limited, provided that the reselected resources are consecutive. For example, as shown in FIG. 13, the resource R1 is in the slot b2, the resource R2 is in the slot b3, and the resource R3 is in the slot b4.

In this example, information originally transmitted by using the resource 7, the resource 8, and the resource 10 is transmitted by using the resource R1 to the resource R3. For details, refer to the foregoing descriptions.

After completing the data transmission in the current COT, the first terminal device may perform the LBT again to complete channel access, and perform data transmission by using the resource R1 to the resource R3. A specific process is not described again.

According to the method provided in this application, the first terminal device directly reselects a group of consecutive resources. This directly avoids transmission interruption caused by not using a resource. Moreover, the resource reselection is essentially that the first terminal device reselects a group of resources based on information reported by the physical layer, which is convenient to implement. In addition, a reselected resource may have a better channel condition, data transmission quality is higher, resource continuity may be higher, and a quantity of channel accesses that the terminal device needs to perform may be reduced, thereby improving resource use efficiency, reducing a data transmission delay, and ensures QoS of service transmission.

In this application, the first terminal device may further adjust a resource of to-be-sent data, to resolve a problem that the COT is lost when the resource selected by the terminal device is no longer used.

FIG. 14 is a schematic flowchart of a communication method according to an embodiment of this application. The method includes the following steps:
Step 1401: A first terminal device sends first sidelink information to a second terminal device.

Before sending the first sidelink information, the first terminal device selects a plurality of resources from a sidelink resource pool, where the plurality of resources may be used as a first resource set. The first resource set selected by the first terminal device is used to transmit a plurality of pieces of sidelink information, and the plurality of pieces of sidelink information include the first sidelink information. In other words, the first resource set includes a resource used to initially transmit the first sidelink information. The first resource set further includes at least one first resource used to retransmit the first sidelink information.

Before sending the first sidelink information, the first terminal device accesses a channel in an LBT manner. A specific process is not described again. After accessing the channel, the first terminal device occupies the channel within a first channel occupancy time. The first channel occupancy time is total duration in which the first terminal device accesses the channel after performing a channel access procedure.

In an implementation, the first resource set includes a third resource set. Resources included in the third resource set are within the first channel occupancy time, and the resources included in the third resource set are consecutive in a time domain unit. The third resource set includes at least one first resource used to retransmit the first sidelink information, the at least one first resource included in the third resource set is located after a first feedback resource, and the first feedback resource is used to feed back whether the first sidelink information is successfully received.

In an implementation, the third resource set includes a fourth resource set. The fourth resource set includes a sidelink resource shared by the first terminal device with the second terminal device or a third terminal device. For example, with reference to FIG. 6, if the resource 8 and the resource 9 are resources shared with the second terminal device, the first terminal device cannot transmit data on the resource 8 and the resource 9. In other words, although the resource 7 to the resource 10 are consecutive in time domain, only the resource 7 and the resource 10 can be used by the first terminal device.

Step 1402: The first terminal device determines that the first sidelink information is successfully transmitted, and the first terminal device sends second sidelink information on the at least one first resource.

In this application, for how the first terminal device determines whether the first sidelink information is successfully sent, refer to the description in step 502. Details are not described herein again.

In a possible implementation, after determining that the first sidelink information is successfully transmitted, the first terminal device may send the second sidelink information on the at least one first resource when the following condition is satisfied:
One or more first resources are included between a second resource in the third resource set and the first feedback resource, and the second resource is used to transmit sidelink information other than the first sidelink information.

When determining that the foregoing condition is not satisfied, the first terminal device may determine that data transmission is not interrupted even if the first sidelink information is not retransmitted on the at least one first resource. Therefore, the first terminal device may not send the second sidelink information on the at least one first resource.

For example, the third resource set includes six resources: a resource 1 to a resource 6. The resource 1 to the resource 6 are a group of consecutive resources, and are respectively corresponding to a slot a1 to a slot a6. It is assumed that the resource a1 is used to initially transmit the first sidelink information, and the resource 4 and the resource 6 are used to retransmit the first sidelink information. The first feedback resource is in the slot a3. In this case, if the first terminal device successfully sends the first sidelink information in the slot a1, when the first terminal device does not retransmit the first sidelink information on the resource 4 and the resource 5, there is an interval between the slot a3 and the slot a6. Consequently, data transmission is interrupted within a channel occupancy time of the first terminal device. Therefore, the first terminal device transmits the second sidelink information on the resource 4 and the resource 5, so that data transmission in the channel occupancy time is continuous.

For another example, the third resource set includes six resources: a resource 1 to a resource 6. The resource 1 to the resource 6 are a group of consecutive resources, and are respectively corresponding to a slot a1 to a slot a6. It is assumed that the resource a1 is used to initially transmit the first sidelink information, and the resource 5 and the resource 6 are used to retransmit the first sidelink information. The first feedback resource is in the slot a3. In this case, if the first terminal device successfully sends the first sidelink information in the slot a1, when the first terminal device does not retransmit the first sidelink information on the resource 5 and the resource 5, although no data is transmitted in the slot a5 and the slot a6, there is no interval between the slot a1 and the slot a4, and the first terminal device does not need to perform data transmission after the slot a4. Therefore, data transmission is not interrupted within a channel occupancy time, and the first terminal device may not transmit any information on the resource 4 and the resource 5.

In a possible implementation, the second sidelink information is the first sidelink information. In this implementation, although the first terminal device determines that the first sidelink information is successfully transmitted, the first terminal device still retransmits the first sidelink information by using each first resource in the at least one first resource. In this way, it can be ensured that data transmission is not interrupted within the first channel occupancy time, and data transmission continuity can be maintained.

In this implementation, whether the first sidelink information retransmitted on the first resource is successfully transmitted may not need to be fed back, so that feedback corresponding to the first sidelink information retransmitted on the first resource may be canceled. Therefore, feedback corresponding to the first sidelink information retransmitted on the at least one first resource may be disabled.

In a possible implementation, the second sidelink information is sidelink information other than the first sidelink information. For example, the resources included in the third resource set are used to initially transmit and/or retransmit a plurality of pieces of sidelink information, and the plurality of pieces of sidelink information include the first sidelink information. The second sidelink information is any sidelink information other than the first sidelink information in the plurality of pieces of sidelink information.

In a possible implementation, the second sidelink information is sidelink information that is not sent or sidelink information that is unsuccessfully sent in the plurality of pieces of sidelink information.

In this implementation, the second sidelink information may not specifically refer to one piece of sidelink information, and the second sidelink information is a general term of a plurality of different pieces of sidelink information. In other words, sidelink information transmitted by the first terminal device in different first resources in the at least one first resource may be the same or may be different. For example, it is assumed that three first resources are included. The first terminal device transmits sidelink information 1 on the 1st first resource, transmits sidelink information 2 on the 2nd first resource, and transmits sidelink information 3 on the 3rd first resource. In this case, the sidelink information 1, the sidelink information 2, and the sidelink information 3 are collectively referred to as the second sidelink information. For another example, it is assumed that three first resources are included. The first terminal device transmits sidelink information 1 on the 1st first resource, transmits the sidelink information 1 on the 2nd first resource, and transmits sidelink information 2 on the 3rd first resource. In this case, the sidelink information 1 and the sidelink information 2 are collectively referred to as the second sidelink information. Other cases are not described by using examples one by one.

In a possible implementation, the resources included in the third resource set are used to initially transmit and/or retransmit a plurality of pieces of sidelink information, and the plurality of pieces of sidelink information include the first sidelink information. For each first resource in the at least one first resource, the second sidelink information transmitted on the first resource satisfies the following condition: a difference between a slot index corresponding to a third resource that is used to transmit the second sidelink information and that is in the third resource set and a slot index corresponding to the first resource is less than or equal to a first threshold. How to specifically determine the first threshold is not limited in this application.

When the second sidelink information satisfies the foregoing condition, it indicates that the third resource is close to the first resource in time domain. In other words, it indicates that the second sidelink information may need to be sent as soon as possible, so that data transmission efficiency can be improved.

For a fourth resource that is originally used to transmit the second sidelink information, when it is determined that the first resource is used to transmit the second sidelink information, the fourth resource is no longer used, and not using the fourth resource does not affect data transmission continuity on a group of consecutive resources that includes the fourth resource. The fourth resource may be a resource in the third resource set, or may not be a resource in the third resource set.

In another possibility, for a fourth resource that is originally used to transmit the second sidelink information, when it is determined that the first resource is used to transmit the second sidelink information, the fourth resource is still used, but the second sidelink information is copied, and is repeatedly sent at a first resource location. In addition, feedback corresponding to the second sidelink information is disabled, and a definition of disabling is consistent with the foregoing descriptions. The fourth resource may be a resource in the third resource set, or may not be a resource in the third resource set.

In another possible implementation, the terminal device may directly share the at least one first resource with another terminal device, and notify the another terminal device, by using sharing indication information, that the at least one first resource can be used. The sharing indication information may be carried in sidelink control information, and may be specifically carried in first stage sidelink control information, or may be carried in second stage sidelink control information. In addition, sidelink information may include length information, location information, and cyclic prefix extension length information of a shared resource. In addition, there is a minimum time interval between a time domain location at which the sharing indication information is sent and a time domain location of the shared resource. The minimum time interval may be defined as a second threshold, and is configured or preconfigured in a resource pool.

In this application, an amount of data of the second sidelink information may not match a bandwidth of the first resource. If a quantity of sub-channels or a quantity of interlace resources included in the third resource for actually transmitting the second sidelink information is Y1, and a quantity of sub-channels or a quantity of interlace resources included in the first resource is Y2, there may be specifically the following several cases:

Case 1: Y1 is less than Y2.

In an implementation, a modulation and coding scheme (modulation and coding scheme, MCS) of the second sidelink information may be reduced, so that the second sidelink information occupies all sub-channels or interlace resources included in the first resource.

In an implementation, an MCS of the second sidelink information may remain unchanged.

A higher MCS indicates a higher bit rate of data transmission, and less frequency domain resources are required for transmitting data blocks of a same size. A lower MCS indicates a lower bit rate of data transmission, and more frequency domain resources are required for transmitting data blocks of a same size.

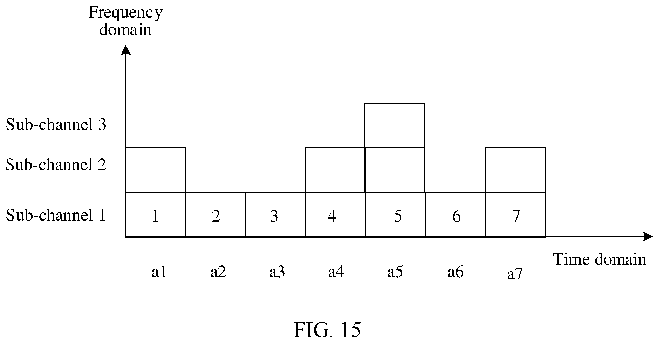

For example, as shown in FIG. 15, the first terminal device selects seven resources from the sidelink resource pool: a resource 1 to a resource 7. The resource 1 to the resource 7 are a group of consecutive resources, and are respectively corresponding to a slot a1 to a slot a7. The resource 4 is used to retransmit the first sidelink information. It is assumed that the resource 5 is used to transmit information 1, the resource 6 is used to transmit information 2, and the resource 7 is used to transmit information 3. The resource 4 occupies two sub-channels in frequency domain, the resource 5 occupies three sub-channels in frequency domain, the resource 6 occupies one sub-channel in frequency domain, and the resource 7 occupies two sub-channels in frequency domain.

If the first sidelink information is successfully transmitted, the first sidelink information does not need to be retransmitted on the resource 4. When the first terminal device sends the information 2 on the resource 4, because the resource 6 originally used to transmit the information 2 includes two sub-channels, which is less than the two sub-channels included in the resource 4, when the information 2 is transmitted on the resource 4, an MCS of the information 2 remains unchanged, or an MCS of the information 2 is reduced.

Case 2: Y1 is equal to Y2.

In this case, the MCS of the second sidelink information may remain unchanged.

For example, with reference to FIG. 15, if the first sidelink information is successfully transmitted, the first sidelink information does not need to be retransmitted on the resource 4. When the first terminal device sends the information 3 on the resource 4, because the resource 7 originally used to transmit the information 3 includes two sub-channels, which is equal to the two sub-channels included in the resource 4, an MCS of the information 3 remains unchanged when the information 3 is transmitted on the resource 4.

Case 3: Y1 is greater than Y2.

In this case, the MCS of the second sidelink information may be increased, or only some information in the second sidelink information is transmitted.

For example, with reference to FIG. 15, if the first sidelink information is successfully transmitted, the first sidelink information does not need to be retransmitted on the resource 4. When the first terminal device sends the information 1 on the resource 4, because the resource 5 originally used to transmit the information 1 includes three sub-channels, which is greater than the two sub-channels included in the resource 4, an MCS of the information 3 is increased when the information 1 is transmitted on the resource 4.

In a possible implementation, the resources included in the third resource set are used to initially transmit and/or retransmit a plurality of pieces of sidelink information, and the plurality of pieces of sidelink information include the first sidelink information. For each first resource in the at least one first resource, the second sidelink information transmitted on the first resource satisfies the following condition:

an absolute value of a difference between a quantity of sub-channels or a quantity of interlace resources included in the third resource that is used to transmit the second sidelink information and is in the third resource set and a quantity of sub-channels or a quantity of interlace resources included in the first resource is less than or equal to a second threshold. How to specifically determine the second threshold is not limited in this application.

According to the method, it can be ensured as much as possible that the MCS of the second sidelink information transmitted on the first resource remains unchanged, thereby improving data transmission efficiency.

In another possible implementation, the terminal device rearranges all to-be-sent information in the third resource set, provided that it is ensured that the rearranged resources are consecutive in a time sequence. There may be specifically the following several implementations:

Case 1: To-be-transmitted data in the third resource set is arranged forward, to ensure that the data sent on the rearranged resources is continuous in time domain. The last resource in the third resource set is no longer used.

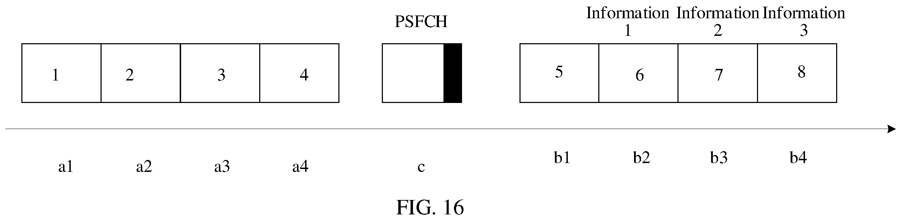

For example, as shown in FIG. 16, the first terminal device selects eight resources from the sidelink resource pool: a resource 1 to a resource 8. The resource 1 to the resource 4 are a group of consecutive resources and are respectively corresponding to a slot a1 to a slot a4. The resource 5 to the resource 8 are a group of consecutive resources and are respectively corresponding to a slot b1 to a slot b4. The resource 1 is used to initially transmit the first sidelink information, and the resource 5 is used to retransmit the first sidelink information. It is assumed that the resource 6 is used to transmit information 1, the resource 7 is used to transmit information 2, and the resource 8 is used to transmit information 3.

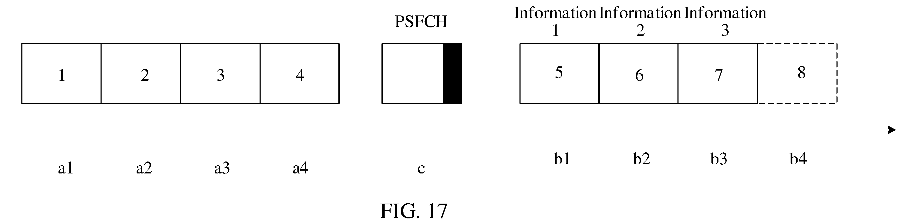

It is assumed that a first feedback resource (that is, a PSFCH in the figure) corresponding to the first sidelink information transmitted on the resource 1 is in a slot c, and the slot c is between the slot a4 and the slot b1. In other words, the first feedback resource and the resources selected by the first terminal device are inconsecutive. If the initial transmission of the first sidelink information succeeds, the first terminal device does not retransmit the first sidelink information on the resource 5. In this case, the first terminal device may send the information 1 to the information 3 one slot in advance, and the resource 8 is no longer used. For example, as shown in FIG. 17, the information 1 is transmitted by using the resource 5, the information 2 is transmitted by using the resource 6, and the information 3 is transmitted by using the resource 7.

The foregoing is merely an example, and there may be another arrangement manner. For example, the information 3 is transmitted by using the resource 5, the information 1 is transmitted by using the resource 6, and the information 2 is transmitted by using the resource 7.

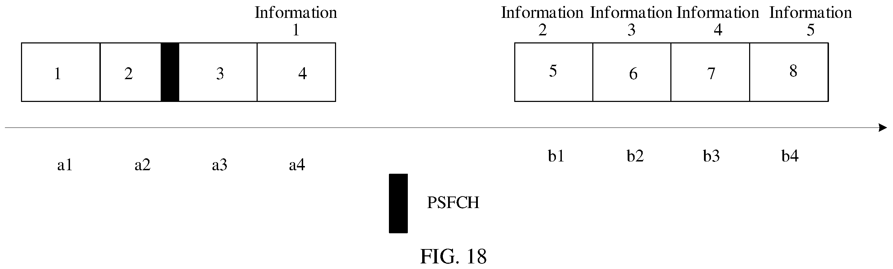

For example, as shown in FIG. 18, the first terminal device selects eight resources from the sidelink resource pool: a resource 1 to a resource 8. The resource 1 to the resource 4 are a group of consecutive resources and are respectively corresponding to a slot a1 to a slot a4. The resource 5 to the resource 8 are a group of consecutive resources and are respectively corresponding to a slot b1 to a slot b4. The resource 1 is used to initially transmit the first sidelink information, and the resource 3 is used to retransmit the first sidelink information. It is assumed that the resource 4 is used to transmit information 1, the resource 5 is used to transmit information 2, the resource 6 is used to transmit information 3, the resource 7 is used to transmit information 4, and the resource 8 is used to transmit information 5.

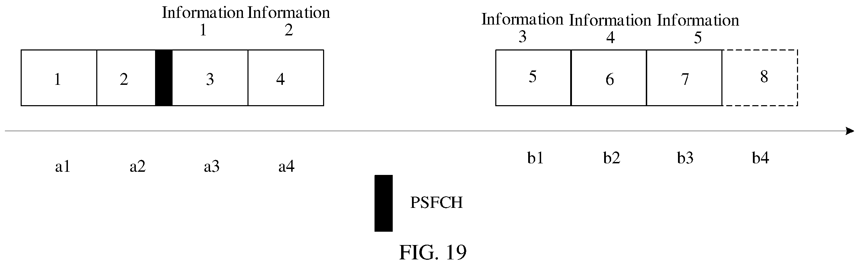

It is assumed that a first feedback resource (that is, a PSFCH in the figure) corresponding to the first sidelink information transmitted on the resource 1 is in the slot a2. In other words, the first feedback resource and the resources selected by the first terminal device are consecutive. If the initial transmission of the first sidelink information succeeds, the first terminal device does not retransmit the first sidelink information on the resource 2. In this case, the first terminal device may send the information 1 to the information 5 one slot in advance, and the resource 8 is no longer used. For example, as shown in FIG. 19, the information 1 is transmitted by using the resource 3, the information 2 is transmitted by using the resource 4, the information 3 is transmitted by using the resource 5, the information 4 is transmitted by using the resource 6, and the information 5 is transmitted by using the resource 7.

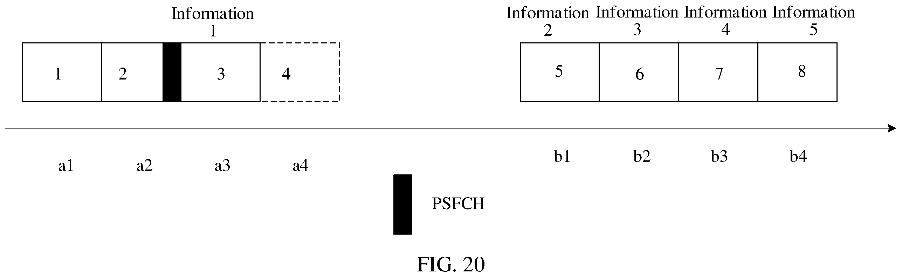

The foregoing is merely an example, and there may be another arrangement manner. For example, as shown in FIG. 20, the first terminal device may send the information 1 one slot in advance, and the resource 4 is no longer used. Information transmitted on the resource 5 to the resource 8 remains unchanged.

Only an example is provided herein, and there may be another arrangement manner. Details are not described herein again.

Case 2: To-be-transmitted data in the third resource set is arranged backward, to ensure that the data sent on the re-arranged resources is continuous in time domain. The 1st resource in the third resource set is no longer used.

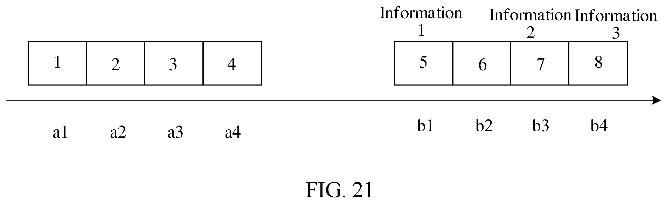

For example, as shown in FIG. 21, the first terminal device selects eight resources from the sidelink resource pool: a resource 1 to a resource 8. The resource 1 to the resource 4 are a group of consecutive resources and are respectively corresponding to a slot a1 to a slot a4. The resource 5 to the resource 8 are a group of consecutive resources and are respectively corresponding to a slot b1 to a slot b4. The resource 1 is used to initially transmit the first sidelink information, and the resource 6 is used to retransmit the first sidelink information. It is assumed that the resource 5 is used to transmit information 1, the resource 7 is used to transmit information 2, and the resource 8 is used to transmit information 3.

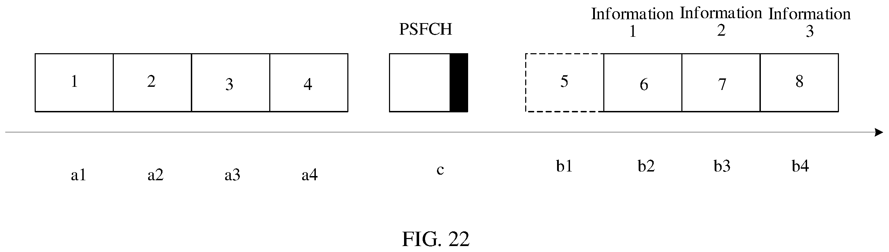

It is assumed that a first feedback resource (that is, a PSFCH in the figure) corresponding to the first sidelink information transmitted on the resource 1 is in a slot c, and the slot c is between the slot a4 and the slot b1. In other words, the first feedback resource and the resources selected by the first terminal device are inconsecutive. If the initial transmission of the first sidelink information succeeds, the first terminal device does not retransmit the first sidelink information on the resource 5. In this case, the first terminal device may delay sending the information 1 to the information 3 by one slot, and the resource 5 is no longer used. For example, as shown in FIG. 22, the information 1 is transmitted by using the resource 6, the information 2 is transmitted by using the resource 7, and the information 3 is transmitted by using the resource 8.

Only an example is provided herein, and there may be another arrangement manner. Details are not described herein again.

In this application, a first resource in the at least one first resource is indicated by sidelink control information, and the sidelink control information is sent by the first terminal device. When sending the first sidelink information, the terminal device indicates, in the sidelink control information, a location of a resource that needs to be subsequently used, to notify another terminal device that the indicated resource is a resource that needs to be subsequently used by the terminal device. When selecting a resource, the another terminal device receives the reserved resource indicated by using the sidelink control information, to avoid a resource selection conflict.

For example, sidelink information includes first stage SCI, and the first stage SCI may reserve a time-frequency resource used to transmit a PSSCH, including a periodically reserved time-frequency resource and time-frequency resources reserved by using a time resource indicator value (time resource indicator value, TRIV) and a frequency resource indicator value (frequency resource indicator value, FRIV). The TRIV and the FRIV indicate a location of a resource used to specify data retransmission.

In this application, the third resource set includes at least one channel occupancy duration. For example, the terminal device reserves specific time in the last slot of the channel occupancy duration to perform a channel access procedure, and continues to obtain a next channel occupancy duration. The plurality of consecutive channel occupancy durations include the resource in the third resource set.

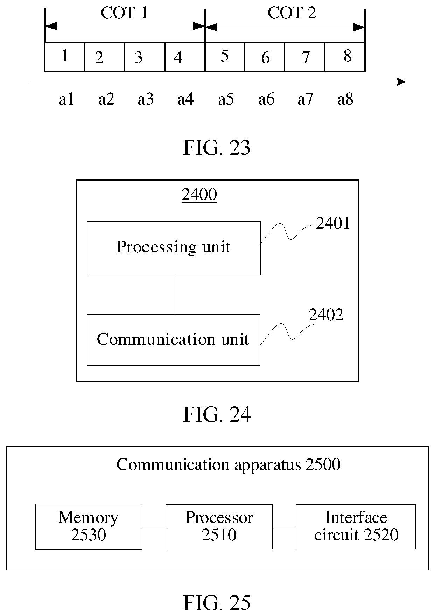

For example, as shown in FIG. 23, the first terminal device selects eight resources from the sidelink resource pool: a resource 1 to a resource 8. The resource 1 to the resource 8 are a group of consecutive resources,

and are respectively corresponding to a slot a1 to a slot a8. The first terminal device contends for a channel before the slot a1, and an obtained COT 1 includes the resource 1 to the resource 4. The first terminal device contends for a channel again before the slot a5, and an obtained COT 2 includes the resource 5 to the resource 8. In other words, the resource 1 to the resource 8 are included in two COTs in time domain.

The method is implemented, so that unused padding information is transmitted, and it can be ensured that a selected resource is continuously transmitted, thereby avoiding a plurality of channel access procedures, and effectively improving resource utilization efficiency. In addition, for the terminal device, data is sent in a timely manner, to ensure service transmission.

In the foregoing embodiments provided in this application, the method provided in embodiments of this application is described from a perspective of interaction between devices. To implement functions in the method provided in embodiments of this application, an access network device, a core network device, or a terminal device may include a hardware structure and/or a software module, and implements the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In embodiments of this application, module division is an example, and is merely a logical function division. In actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

Same as the foregoing concept, as shown in FIG. 24, an embodiment of this application further provides a communication apparatus 2400, configured to implement the functions of the access network device, the core network device, or the terminal device in the foregoing method. For example, the apparatus may be a software module or a chip system. In this embodiment of this application, the chip system may include a chip, or may include a chip and another discrete component. The communication apparatus 2400 may include a processing unit 2401 and a communication unit 2402.

In this embodiment of this application, the communication unit may also be referred to as a transceiver unit, and may include a sending unit and/or a receiving unit, which are respectively configured to perform sending and receiving steps of the access network device, the core network device, or the terminal device in the foregoing method embodiments.

The following describes the communication apparatus provided in this embodiment of this application in detail with reference to FIG. 24 and FIG. 25. It should be understood that descriptions of apparatus embodiments correspond to the descriptions of the method embodiments. Therefore, for content that is not described in detail, refer to the method embodiments. For brevity, details are not described herein again.

The communication unit may also be referred to as a transceiver, a transceiver machine, a transceiver apparatus, or the like. The processing unit may also be referred to as a processor, a processing board, a processing module, a processing apparatus, or the like. Optionally, a component configured to implement a receiving function in the communication unit 2402 may be considered as a receiving unit, and a component configured to implement a sending function in the communication unit 2402 may be considered as a sending unit. In other words, the communication unit 2402 includes a receiving unit and a sending unit. The communication unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

In an implementation, the communication apparatus 2400 may perform the following functions:

a communication unit, configured to send first sidelink information to a second terminal device; and
a processing unit, configured to determine that the first sidelink information is successfully transmitted, and perform resource reselection on a resource in a first resource set, where the first resource set includes at least one group of resources, the at least one group of resources includes at least one first resource, each group of resources in the at least one group of resources are consecutive in time domain, and the at least one first resource is used to retransmit the first sidelink information.

In an implementation, the processing unit is specifically configured to:
perform resource reselection on the resource in the first resource set to determine a second resource set.

In an implementation, the communication unit is further configured to:
send second sidelink information on a resource in the second resource set, where data in the second sidelink information is different from data in the first sidelink information.

In an implementation, the second resource set includes N resources, N is an integer greater than 0, and the N resources satisfy:

the N resources are consecutive in time domain, the N resources and at least one resource other than M resources in the first resource set are consecutive in time domain, and the M resources are resources in the first resource set that are reselected by the first terminal device; or
the N resources include at least two groups of resources, each group of resources in the at least two groups of resources are consecutive in time domain, and one group of resources in the at least two groups of resources and at least one resource other than M resources in the first resource set are consecutive in time domain.

In an implementation, the processing unit is specifically configured to:

perform resource reselection on a resource located after a first feedback resource in the first resource set, where the first feedback resource is used to feed back whether the first sidelink information is successfully received, and the first feedback resource is located before the at least one first resource in time domain; or
perform resource reselection on a second resource and a resource located after the second resource in the first resource set, where the second resource is the 1st first resource in the at least one first resource in time domain.

In an implementation, the processing unit is further configured to determine the first resource set in a sidelink resource pool.

In an implementation, the communication apparatus 2400 may perform the following functions:

a communication unit, configured to send first sidelink information to a second terminal device; and
a processing unit, configured to determine that the first sidelink information is successfully transmitted, and send second sidelink information on at least one first resource in a third resource set by using the communication unit, where the at least one first resource is used to retransmit the first sidelink information, resources included in the third resource set are consecutive in a time domain unit, the at least one first resource is located after a first feedback resource in time domain, and the first feedback resource is used to feed back whether the first sidelink information is successfully received.

In an implementation, the at least one first resource is within a first channel occupancy time, and the first channel occupancy time is total duration for channel access by the first terminal device after performing a channel access procedure.

In an implementation, the second sidelink information is the first sidelink information, and feedback corresponding to the first sidelink information retransmitted on the at least one first resource is disabled.

In an implementation, the resources included in the third resource set are used to initially transmit and/or retransmit a plurality of pieces of sidelink information, and the plurality of pieces of sidelink information include the first sidelink information.

The second sidelink information is any sidelink information other than the first sidelink information in the plurality of pieces of sidelink information.

The foregoing is merely an example. The processing unit 2401 and the communication unit 2402 may further perform other functions. For more detailed descriptions, refer to the related descriptions in the foregoing method embodiments. Details are not described herein again.

FIG. 25 shows a communication apparatus 2500 according to an embodiment of this application. The apparatus shown in FIG. 25 may be an implementation of a hardware circuit of the apparatus shown in FIG. 24. The communication apparatus is applicable to the foregoing flowchart, and performs the functions of the access network device, the core network device, or the terminal device in the foregoing method embodiments. For ease of descriptions, FIG. 25 shows only main components of the communication apparatus.

As shown in FIG. 25, the communication apparatus 2500 includes a processor 2510 and an interface circuit 2520. The processor 2510 and the interface circuit 2520 are coupled to each other. It may be understood that the interface circuit 2520 may be a transceiver or an input/output interface. Optionally, the communication apparatus 2500 may further include a memory 2530, configured to store instructions executed by the processor 2510, input data required by the processor 2510 to run instructions, or data generated after the processor 2510 runs instructions.

When the communication apparatus 2500 is configured to implement the foregoing method, the processor 2510 is configured to implement a function of the foregoing processing unit 2401, and the interface circuit 2520 is configured to implement a function of the foregoing communication unit 2402.

When the communication apparatus is a chip used in the terminal device, the chip of the terminal device implements the function of the terminal device in the foregoing method embodiments. The chip of the terminal device receives information from another module (for example, a radio frequency module or an antenna) in the terminal device; or the chip of the terminal device sends information to another module (for example, a radio frequency module or an antenna) in the terminal device.

It may be understood that the processor in this embodiment of this application may be a central processing unit (Central Processing Unit, CPU), or may be another general-purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor.

The processor in this embodiment of this application may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk drive, a removable hard disk drive, a CD-ROM, or any other form of storage medium well known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be in a network device or a terminal device. Alternatively, the processor and the storage medium may exist in a network device or a terminal device as discrete components.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, comprising:

   sending first sidelink information to a second terminal device; and
   determining that the first sidelink information is successfully transmitted, and performing resource reselection on a resource in a first resource set, wherein the first resource set comprises at least one group of resources, the at least one group of resources comprises at least one first resource, each group of resources in the at least one group of resources are consecutive in time domain, and the at least one first resource is used to retransmit the first sidelink information.

2. The method according to claim 1, wherein the performing resource reselection on a resource in a first resource set comprises:
   performing resource reselection on the resource in the first resource set to determine a second resource set.

3. The method according to claim 2, wherein the method further comprises:
   sending second sidelink information on a resource in the second resource set, wherein data in the second sidelink information is different from data in the first sidelink information.

4. The method according to claim 2 or 3, wherein the second resource set comprises N resources, N is an integer greater than 0, and the N resources satisfy:

   the N resources are consecutive in time domain, the N resources and at least one resource other than M resources in the first resource set are consecutive in time domain, and the M resources are resources on which resource reselection is performed in the first resource set; or
   the N resources comprise at least two groups of resources, each group of resources in the at least two groups of resources are consecutive in time domain, and one group of resources in the at least two groups of resources and at least one resource other than M resources in the first resource set are consecutive in time domain.

5. The method according to any one of claims 1 to 4, wherein the performing resource reselection on a resource in a first resource set comprises:

   performing resource reselection on a resource located after a first feedback resource in the first resource set, wherein the first feedback resource is used to feed back whether the first sidelink information is successfully received, and the first feedback resource is located before the at least one first resource in time domain; or
   performing resource reselection on a second resource and a resource located after the second resource in the first resource set, wherein the second resource is the $1^{st}$ first resource in the at least one first resource in time domain.

6. The method according to any one of claims 1 to 5, wherein the method further comprises:

   triggering the resource reselection on the resource in the first resource set.

7. The method according to any one of claims 1 to 6, wherein the method further comprises: determining the first resource set in a sidelink resource pool.

8. The method according to any one of claims 1 to 7, wherein the determining that the first sidelink information is successfully transmitted comprises:

   if an acknowledgment corresponding to the first sidelink information is received on the first feedback resource, determining that the first sidelink information is successfully transmitted; or
   if no negative acknowledgment corresponding to the first sidelink information is received on the first feedback resource, determining that the first sidelink information is successfully transmitted, wherein
   the first feedback resource is used to feed back whether the first sidelink information is successfully received.

9. A communication method, comprising:

   sending first sidelink information to a second terminal device; and
   determining that the first sidelink information is successfully transmitted, and sending second sidelink information on at least one first resource in a third resource set, wherein the at least one first resource is used to retransmit the first sidelink information, resources comprised in the third resource set are consecutive in a time domain unit, the at least one first resource is located after a first feedback resource in time domain, and the first feedback resource is used to feed back whether the first sidelink information is successfully received.

10. The method according to claim 9, wherein the at least one first resource is within a first channel occupancy time, and the first channel occupancy time is total duration for channel access after a channel access procedure is performed.

11. The method according to claim 9 or 10, wherein the determining that the first sidelink information is successfully transmitted comprises:

if an acknowledgment corresponding to the first sidelink information is received on the first feedback resource, determining that the first sidelink information is successfully transmitted; or

if no negative acknowledgment corresponding to the first sidelink information is received on the first feedback resource, determining that the first sidelink information is successfully transmitted, wherein

the first feedback resource is used to feed back whether the first sidelink information is successfully received.

12. The method according to any one of claims 9 to 11, wherein the second sidelink information is the first sidelink information, and feedback corresponding to the first sidelink information retransmitted on the at least one first resource is disabled.

13. The method according to any one of claims 9 to 12, wherein the resources comprised in the third resource set are used to initially transmit and/or retransmit a plurality of pieces of sidelink information, and the plurality of pieces of sidelink information comprise the first sidelink information; and the second sidelink information is any sidelink information other than the first sidelink information in the plurality of pieces of sidelink information.

14. The method according to any one of claims 9 to 13, wherein one or more first resources are comprised between a second resource in the third resource set and the first feedback resource, and the second resource is used to transmit sidelink information other than the first sidelink information.

15. The method according to any one of claims 9 to 14, wherein the third resource set comprises a fourth resource set, and the fourth resource set comprises a sidelink resource shared with the second terminal device or a third terminal device.

16. The method according to any one of claims 9 to 15, wherein a first resource in the at least one first resource is indicated by control information, and the sidelink control information is sent by a device that sends the first sidelink information.

17. The method according to any one of claims 9 to 16, wherein the third resource set comprises at least one channel occupancy duration.

18. The method according to any one of claims 9 to 17, wherein the third resource set is in a sidelink resource pool.

19. A communication apparatus, comprising:

a communication unit, configured to send first sidelink information to a second terminal device; and
a processing unit, configured to determine that the first sidelink information is successfully transmitted, and perform resource reselection on a resource in a first resource set, wherein the first resource set comprises at least one group of resources, the at least one group of resources comprises at least one first resource, each group of resources in the at least one group of resources are consecutive in time domain, and the at least one first resource is used to retransmit the first sidelink information.

20. The apparatus according to claim 19, wherein the processing unit is specifically configured to:
perform resource reselection on the resource in the first resource set to determine a second resource set.

21. The apparatus according to claim 20, wherein the communication unit is further configured to:
send second sidelink information on a resource in the second resource set, wherein data in the second sidelink information is different from data in the first sidelink information.

22. The apparatus according to claim 20 or 21, wherein the second resource set comprises N resources, N is an integer greater than 0, and the N resources satisfy:

the N resources are consecutive in time domain, the N resources and at least one resource other than M resources in the first resource set are consecutive in time domain, and the M resources are resources on which resource reselection is performed in the first resource set; or

the N resources comprise at least two groups of resources, each group of resources in the at least two groups of resources are consecutive in time domain, and one group of resources in the at least two groups of resources and at least one resource other than M resources in the first resource set are consecutive in time domain.

23. The apparatus according to any one of claims 19 to 22, wherein the processing unit is specifically configured to:

perform resource reselection on a resource located after a first feedback resource in the first resource set, wherein the first feedback resource is used to feed back whether the first sidelink information is successfully received, and the first feedback resource is located before the at least one first resource in time domain; or perform resource reselection on a second resource and a resource located after the second resource in the first resource set, wherein the second resource is the $1^{st}$ first resource in the at least one first resource in time domain.

24. The apparatus according to any one of claims 19 to 23, wherein the processing unit is further configured to:
determine the first resource set in a sidelink resource pool.

25. The apparatus according to any one of claims 19 to 24, wherein the processing unit is specifically configured to:

if an acknowledgment corresponding to the first sidelink information is received on the first feedback resource, determine that the first sidelink information is successfully transmitted; or if no negative acknowledgment corresponding to the first sidelink information is received on the first feedback resource, determine that the first sidelink information is successfully transmitted, wherein the first feedback resource is used to feed back whether the first sidelink information is successfully received.

26. A communication apparatus, comprising:
a communication unit, configured to send first sidelink information to a second terminal device; and a processing unit, configured to determine that the first sidelink information is successfully transmitted, and send second sidelink information on at least one first resource in a third resource set by using the communication unit, wherein the at least one first resource is used to retransmit the first sidelink information, resources comprised in the third resource set are consecutive in a time domain unit, the at least one first resource is located after a first feedback resource in time domain, and the first feedback resource is used to feed back whether the first sidelink information is successfully received.

27. The apparatus according to claim 26, wherein the at least one first resource is within a first channel occupancy time, and the first channel occupancy time is total duration for channel access after a channel access procedure is performed.

28. The apparatus according to claim 25 or 26, wherein the processing unit is specifically configured to:

if an acknowledgment corresponding to the first sidelink information is received on the first feedback resource, determine that the first sidelink information is successfully transmitted; or if no negative acknowledgment corresponding to the first sidelink information is received on the first feedback resource, determine that the first sidelink information is successfully transmitted, wherein the first feedback resource is used to feed back whether the first sidelink information is successfully received.

29. The apparatus according to any one of claims 26 to 28, wherein the second sidelink information is the first sidelink information, and feedback corresponding to the first sidelink information retransmitted on the at least one first resource is disabled.

30. The apparatus according to any one of claims 26 to 29, wherein the resources comprised in the third resource set are used to initially transmit and/or retransmit a plurality of pieces of sidelink information, and the plurality of pieces of sidelink information comprise the first sidelink information; and the second sidelink information is any sidelink information other than the first sidelink information in the plurality of pieces of sidelink information.

31. The apparatus according to any one of claims 26 to 30, wherein one or more first resources are comprised between a second resource in the third resource set and the first feedback resource, and the second resource is used to transmit sidelink information other than the first sidelink information.

32. The apparatus according to any one of claims 26 to 31, wherein the third resource set comprises a fourth resource set, and the fourth resource set comprises a sidelink resource shared with the second terminal device or a third terminal device.

33. The apparatus according to any one of claims 26 to 32, wherein a first resource in the at least one first resource is indicated by control information, and the sidelink control information is sent by a device that sends the first sidelink information.

34. The apparatus according to any one of claims 26 to 33, wherein the third resource set comprises at least one channel occupancy duration.

35. The apparatus according to any one of claims 26 to 34, wherein the third resource set is in a sidelink resource pool.

36. A communication apparatus, comprising a processor and a memory, wherein
the processor is configured to execute a computer program or instructions stored in the memory, to enable the communication apparatus to implement the method according to any one of claims 1 to 18.

37. A computer-readable storage medium, storing a computer program or instructions, wherein when the computer program or the instructions are run on a computer, the computer is enabled to implement the method according to any one of claims 1 to 18.

FIG. 1A

FIG. 1B

Network device
1011

Network device 1012

Coverage of
the network
device 1011

Downlink

Uplink

Downlink

Uplink

Coverage of
the network
device 1012

Sidelink

Terminal device
1021

Terminal device
1022

FIG. 1C

EP 4 576 843 A1

Network device
1011

Coverage of
the network
device 1011

Sidelink

Terminal device
1021

Terminal device
1022

FIG. 1D

(a)

V2V

(b)

V2P

(c)

V2I/V2N

FIG. 2

FIG. 3

Base
station ─────────────────────────────────────

Downlink control
information

Transmit
end UE ─────────────────────────────────────

Sidelink control
and data

Receive
end UE ─────────────────────────────────────

FIG. 4

| First terminal device | | Second terminal device |

Step 501: The first terminal
device sends first sidelink
information to the second
terminal device

First sidelink information ⟶

Step 502: The first terminal
device determines that the first
sidelink information is
successfully transmitted, and
the first terminal device
performs resource reselection
on a resource in a first resource
set

FIG. 5

FIG. 6

FIG. 7

FIG. 8

FIG. 9

FIG. 10

FIG. 11

| 1 | 2 | 3 | 4 | 5 | | | | | R1 | R2 | R3 |
|---|---|---|---|---|---|---|---|---|----|----|----|

a1   a2   a3   a4   a5      c      b1   b2   b3   b4   b5

▌ PSFCH

FIG. 12

| 1 | 2 | 3 | 4 | 5 | | | R1 | R2 | R3 | |
|---|---|---|---|---|---|---|----|----|----|---|

a1   a2   a3   a4   a5      c      b1   b2   b3   b4   b5

▌ PSFCH

FIG. 13

First terminal device

Second terminal device

Step 1401: The first terminal device sends first sidelink information to the second terminal device

First sidelink information

Step 1402: The first terminal device determines that the first sidelink information is successfully transmitted, and the first terminal device sends second sidelink information on at least one first resource

FIG. 14

FIG. 15

Information 1  Information 2  Information 3

| 5 | 6 | 7 | 8 |

b1  b2  b3  b4

PSFCH

c

| 1 | 2 | 3 | 4 |

a1  a2  a3  a4

FIG. 16

EP 4 576 843 A1

| | | | | PSFCH | Information 1 | Information 2 | Information 3 | |
|---|---|---|---|---|---|---|---|---|
| 1 | 2 | 3 | 4 | ▮ | 5 | 6 | 7 | 8 |
| a1 | a2 | a3 | a4 | c | b1 | b2 | b3 | b4 |

FIG. 17

Information 1

Information 2  Information 3  Information 4  Information 5

| 1 | 2 | | 3 | 4 |

| 5 | 6 | 7 | 8 |

a1    a2    a3    a4

b1    b2    b3    b4

PSFCH

FIG. 18

Information Information
1 2

| 1 | 2 | ▉ | 3 | 4 |

a1    a2    a3    a4

Information Information Information
3 4 5

| 5 | 6 | 7 | 8 |

b1    b2    b3    b4

▉ PSFCH

FIG. 19

FIG. 20

| 1 | 2 | 3 | 4 |
|---|---|---|---|

a1      a2      a3      a4

Information 1    Information 2  Information 3

| 5 | 6 | 7 | 8 |
|---|---|---|---|

b1      b2      b3      b4

FIG. 21

PSFCH

Information Information Information
1            2            3

| 1 | 2 | 3 | 4 |

| 5 | 6 | 7 | 8 |

a1   a2   a3   a4          c          b1   b2   b3   b4

FIG. 22

FIG. 23

FIG. 24

FIG. 25

## INTERNATIONAL SEARCH REPORT

| | International application No. |
|---|---|
| | **PCT/CN2023/117192** |

| A. | CLASSIFICATION OF SUBJECT MATTER |
|---|---|
| | H04W4/40(2018.01)i |

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; 3GPP: 侧链, 副链, 重传, 成功, 正确, 释放, 反馈, 重选, Sidelink, SL, success, correct, release, feedback, ACK, reselection

| C. | DOCUMENTS CONSIDERED TO BE RELEVANT | |
|---|---|---|
| Category* | Citation of document, with indication, where appropriate, of the relevant passages | Relevant to claim No. |
| X | CN 111435885 A (HUAWEI TECHNOLOGIES CO., LTD.) 21 July 2020 (2020-07-21) description, paragraphs [0107]-[0268], and figures 1-15 | 1-37 |
| X | CN 114586413 A (QUALCOMM INC.) 03 June 2022 (2022-06-03) description, paragraphs [0029]-[0163], and figures 1-13 | 1-37 |
| A | CN 107645774 A (POTEVIO INFORMATION TECHNOLOGY CO., LTD.) 30 January 2018 (2018-01-30) entire document | 1-37 |
| A | US 2021377939 A1 (CHAE HYUKJIN et al.) 02 December 2021 (2021-12-02) entire document | 1-37 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **22 November 2023** | **23 November 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/117192**

| Patent document cited in search report | | | Publication date (day/month/year) | Patent family member(s) | | | Publication date (day/month/year) |
|---|---|---|---|---|---|---|---|
| CN | 111435885 | A | 21 July 2020 | WO | 2020143731 | A1 | 16 July 2020 |
| CN | 114586413 | A | 03 June 2022 | EP | 4052523 | A1 | 07 September 2022 |
| | | | | EP | 4052523 | B1 | 16 August 2023 |
| | | | | US | 2023254821 | A1 | 10 August 2023 |
| | | | | US | 2021136732 | A1 | 06 May 2021 |
| | | | | US | 11665671 | B2 | 30 May 2023 |
| | | | | WO | 2021086883 | A1 | 06 May 2021 |
| CN | 107645774 | A | 30 January 2018 | CN | 107645774 | B | 28 July 2022 |
| US | 2021377939 | A1 | 02 December 2021 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211216365